(19) Europäisches Patentamt
European Patent Office
Office européen des brevets

(11) **EP 4 456 467 A1**

(12) **EUROPEAN PATENT APPLICATION**
published in accordance with Art. 153(4) EPC

(43) Date of publication:
**30.10.2024 Bulletin 2024/44**

(21) Application number: **22911725.4**

(22) Date of filing: **12.12.2022**

(51) International Patent Classification (IPC):
**H04L 5/00** (2006.01)   **H04L 5/14** (2006.01)
**H04W 72/04** (2023.01)

(52) Cooperative Patent Classification (CPC):
**H04L 5/00; H04L 5/14; H04W 72/04**

(86) International application number:
**PCT/KR2022/020082**

(87) International publication number:
**WO 2023/121092 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 KR 20210185222
30.12.2021 KR 20210192947**

(71) Applicant: **LG Electronics Inc.
Yeongdeungpo-gu
Seoul 07336 (KR)**

(72) Inventors:
• **YOU, Hyangsun
  Seoul 06772 (KR)**
• **KO, Hyunsoo
  Seoul 06772 (KR)**

(74) Representative: **Maikowski & Ninnemann
Patentanwälte Partnerschaft mbB
Postfach 15 09 20
10671 Berlin (DE)**

(54) **DEVICE OPERATION METHOD AND DEVICE USING SAME IN WIRELESS COMMUNICATION SYSTEM**

(57)     Provided are a device operation method and a device in a wireless communication system. device may be a terminal, a chipset, or a base station. The terminal receives a CSI-RS configuration message, notifying CSI-RS frequency resources on which a CSI-RS is transmitted, and a full duplex configuration message, notifying an FD time resource operating at full duplex and at least one of a DL frequency resource used for downlink and a UL frequency resource used for uplink in the FD time resource, from the base station, and then receives and measures the CSI-RS. The terminal receives/measures the CSI-RS on the basis of a corresponding method at the FD time resource and a time resource other than the FD time resource.

FIG. 16

**Description**

TECHNICAL FIELD

This disclosure relates to a method of operating a device in a wireless communication system and a device using the method.

BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, full duplex (FD) operation can be performed. When performing FD operation, downlink reception and uplink transmission can occur simultaneously in a given time resource. Half duplex (HD) operation differs in that only one of downlink reception and uplink transmission can be performed in a given time resource. For FD operation, i) in the same time resource, some frequency resources may be allocated to downlink subbands and other frequency resources to uplink subbands, or ii) frequency resources may be allocated that can be used for both downlink reception and uplink transmission in the same time resource.

In the prior art, frequency resources within a particular band are used for all downlinks or all uplinks at any given time. Therefore, the user equipment (UE) may determine that the resources set to receive the downlink reference signal (or the resources set to transmit the uplink reference signal) are all available for downlink reception (or uplink transmission) and perform transmission and reception.

On the other hand, in an environment with FD operation, there may be situations where some frequency resources are unavailable for downlinks in the time resource where the cell is operating as a downlink, or some frequency resources are unavailable for uplinks in the time resource where the cell is operating as an uplink.

In such a case, theoretically, the resources for which the UE is configured to receive the downlink reference signal should be set to avoid unavailable resources for the downlink, and the resources for which the UE is configured to transmit the uplink reference signal should also be set to avoid unavailable resources for the uplink. However, in practice, when the FD slot performing FD operation and the HD slot performing HD operation are dynamically changed, difficulties may arise in setting the frequency resources of the reference signal to avoid the unavailable resources.

**DISCLOSURE**

**TECHNICAL PROBLEM**

The technical problem that the present disclosure aims to solve is to provide a method of operating a device in a wireless communication system and a device that uses the method.

**TECHNICAL SOLUTION**

In one aspect, provided is a method of operating a user equipment (UE) in a wireless communication system. The method includes, after the UE has performed the access procedure with the base station, receiving a channel state information reference signal (CSI-RS) configuration message which informs a starting resource block and a number of resource blocks of CSI-RS frequency resources through which CSI-RS is transmitted and a full duplex (FD) configuration message which informs at least one of a FD time resource operating as full duplex, a downlink (DL) frequency resource used for DL, or an uplink (UL) frequency resource used for UL in the FD time resource, receiving the CSI-RS and measuring the CSI-RS. In the FD time resource, the UE receives and measures the CSI-RS only from some of the CSI-RS frequency resources within the DL frequency resource, among the CSI-RS frequency resources informed by the CSI-RS configuration message, and in the non-FD time resource, the UE receives and measures the CSI-RS from the CSI-RS frequency resources informed by the CSI-RS configuration message.

In another aspect, provided is a UE. The UE includes a transceiver, at least one memory, and at least one processor operably coupled to the at least one memory and the transceiver. The processor performs the method of operation of the UE described above.

In still another aspect, an apparatus of a UE is provided. The apparatus includes at least one memory and at least one processor operably coupled to the at least one memory. The processor performs the aforementioned method of operating the UE based at least in part on instructions stored in the memory.

In still another aspect, provided is at least one computer readable medium (CRM) comprising instructions based on being executed by at least one processor. The CRM performs each of the steps of the method of operating the UE described above.

In still another aspect, provided is a method of operating a base station in a wireless communication system. The method includes, after performing a random access procedure with a user equipment (UE) and connecting to the UE, the BS transmits a channel state information reference signal (CSI-RS) configuration message to the UE, the CSI-RS configuration message informing a starting resource block and a number of resource blocks of the CSI-RS frequency resources to which the CSI-RS is transmitted, transmits a full duplex (FD) configuration message to the UE, the FD configuration message informing at least one of a FD time resource operating as full duplex, a downlink (DL) frequency resource used for DL, or an uplink (UL) frequency resource used for UL in the FD time resource. After that, the BS transmits the CSI-RS to the UE and receives a measurement result of the CSI-RS from the UE. In the FD time resource, the BS transmits the CSI-RS only in some CSI-RS frequency resources within the DL frequency resource among the CSI-RS frequency resources informed by the CSI-RS configuration message, and, in time resources other than the FD time resource, the BS transmits the CSI-RS in the CSI-RS frequency resources informed by the CSI-RS configuration message.

In still another aspect, provided is a base station (BS). The BS includes a transceiver, at least one memory and at least one processor operably coupled to the at least one memory and the transceiver. The processor performs the base station operation method described above.

## ADVANTAGEOUS EFFECTS

In systems supporting full duplex operation, it allows UEs to receive/measure CSI-RS on non-contiguous frequency resources without changing the existing CSI-RS settings of existing systems supporting only half duplex operation, for example. Therefore, the convenience of implementation increases and the impact of changes in standard specifications can be reduced.

## BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 shows examples of how to apply full duplex within an intra-carrier.
FIG. 13 shows an example in which a time resource operating in half duplex (HD) and a time resource operating in full duplex (FD) such as SB-FD or SS-FD exist together.
FIG. 14 shows examples of first time resource, second time resource, first frequency resource and second frequency resource.
FIG. 15 shows an example of CSI-RS composed of non-contiguous PRB resources.
FIG. 16 is an example of a method of operating a UE in a wireless communication system.
FIG. 17 illustrates CSI-RS frequency resources configured to the UE and resources on which the UE actually performs CSI-RS reception and measurement.
FIG. 18 illustrates the operation between the base station and the UE.
FIG. 19 illustrates a wireless device that can be applied the present specification.
FIG. 20 shows an example of a signal processing module structure.
FIG. 21 shows another example of the structure of a signal processing module in a transmission device.
FIG. 22 shows an example of a wireless communication device according to an implementation example of the present disclosure.

FIG. 23 shows an example of the processor 2000.
FIG. 24 shows an example of the processor 3000.
FIG. 25 shows another example of a wireless device.
FIG. 26 shows another example of a wireless device applied to the present specification.
FIG. 27 illustrates a hand-held device applied to the present specification.
FIG. 28 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

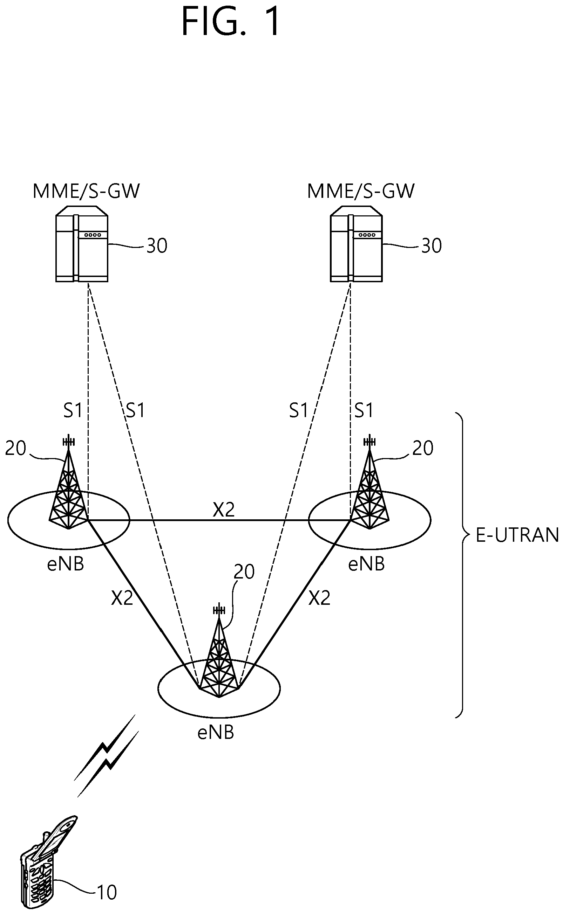

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

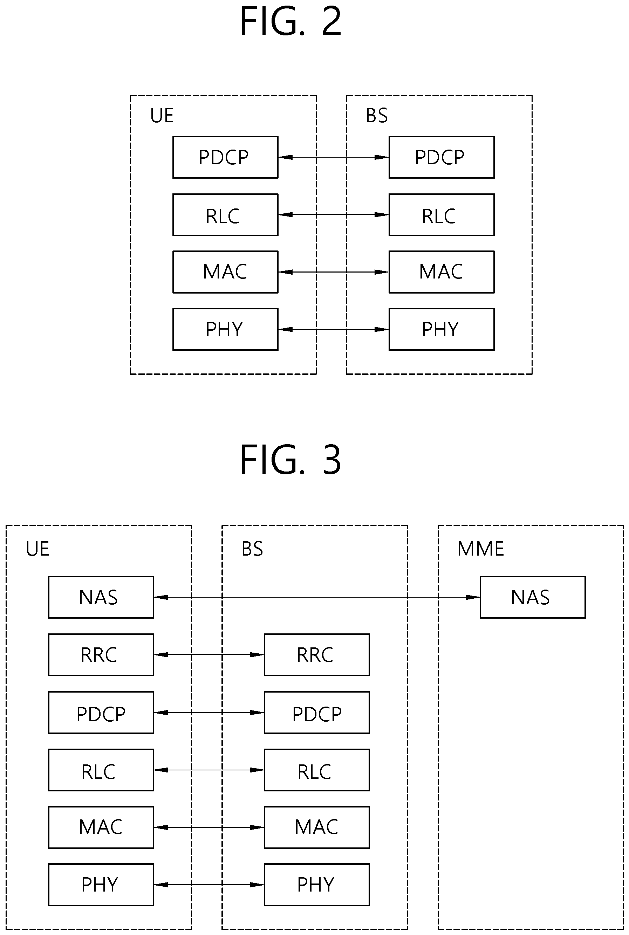

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

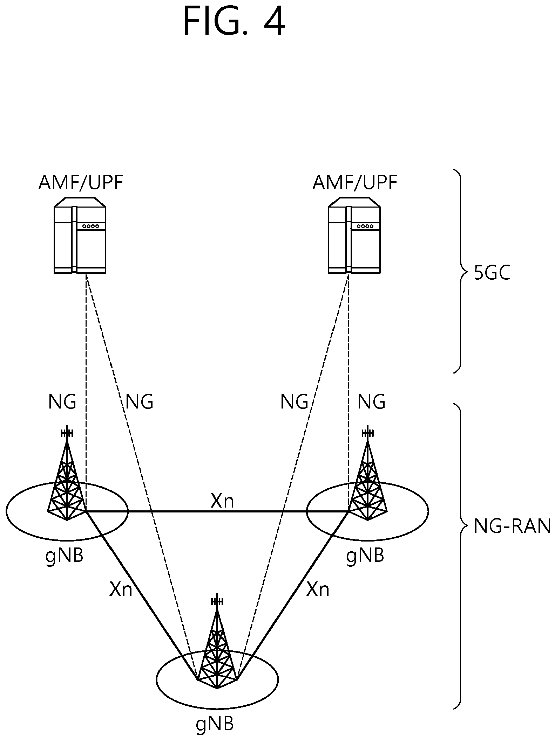

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

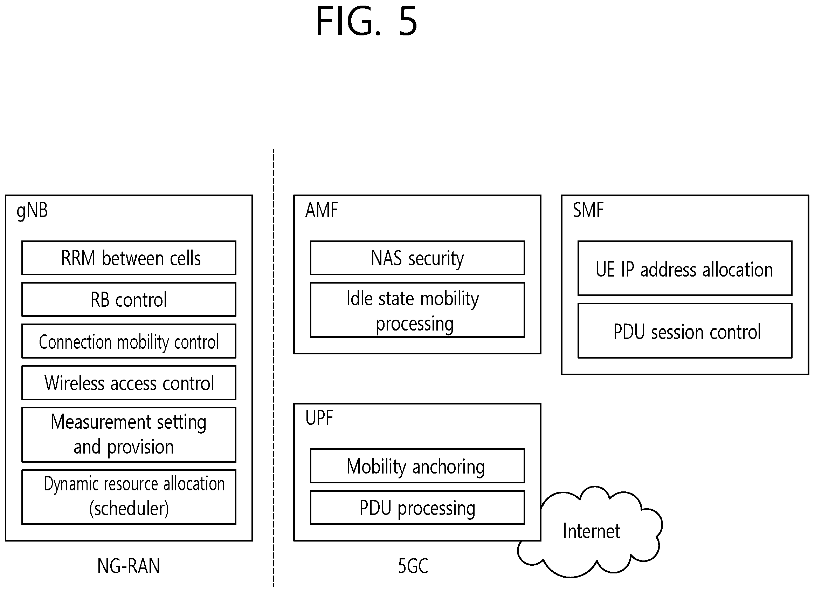

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

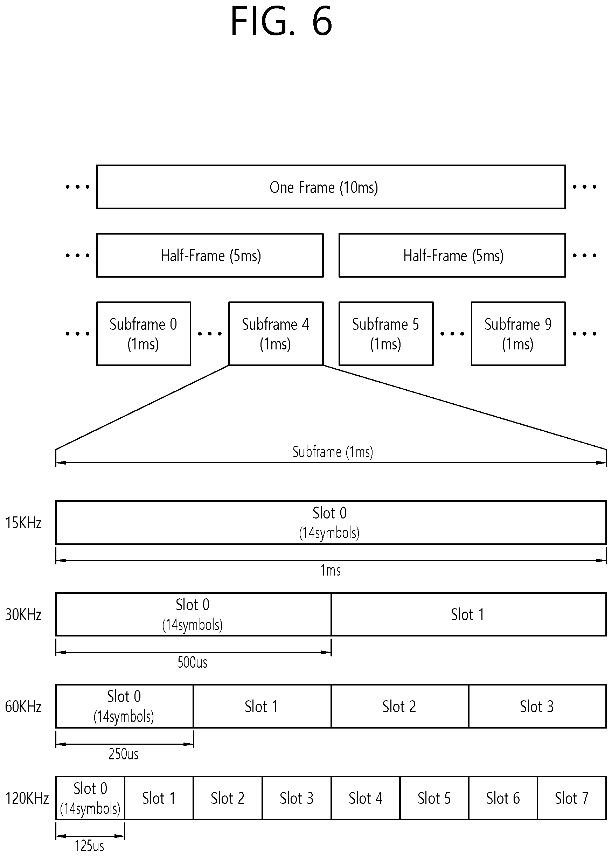

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| $\mu$ | $N^{slot}_{symb}$ | $N^{frame,u}_{slot}$ | $N^{subframe,u}_{slot}$ |
|---|---|---|---|
| 2 | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

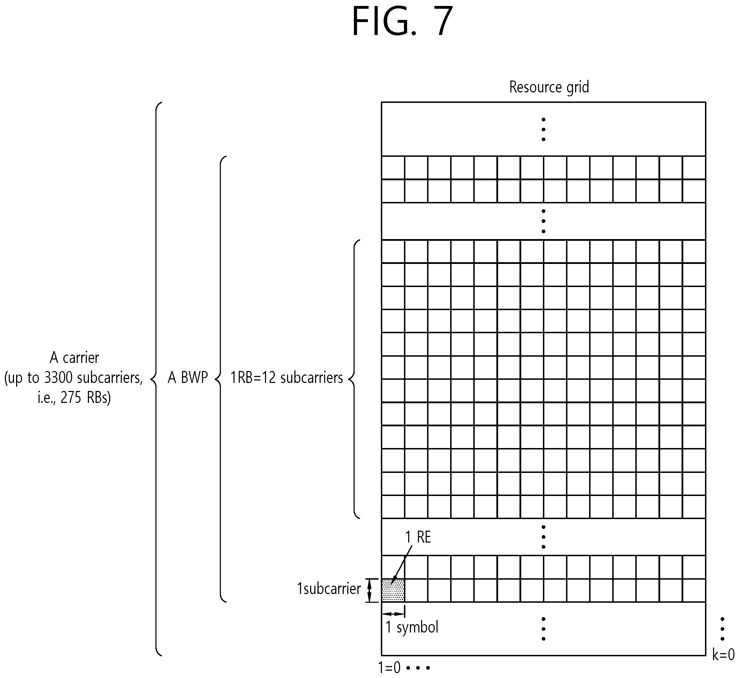

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

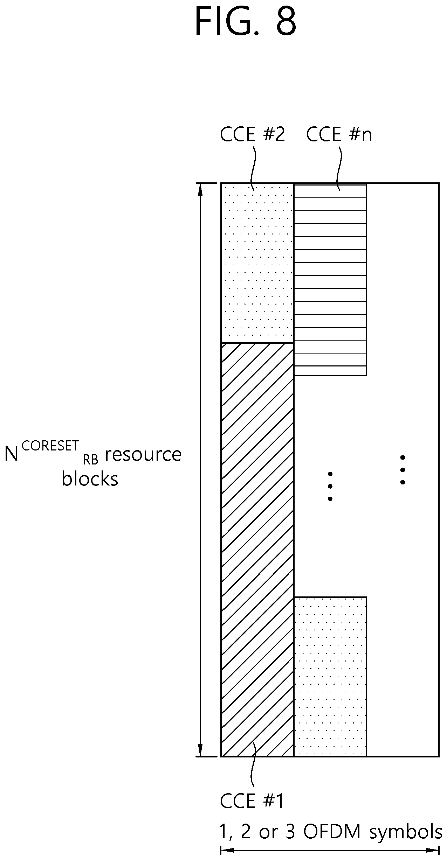

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

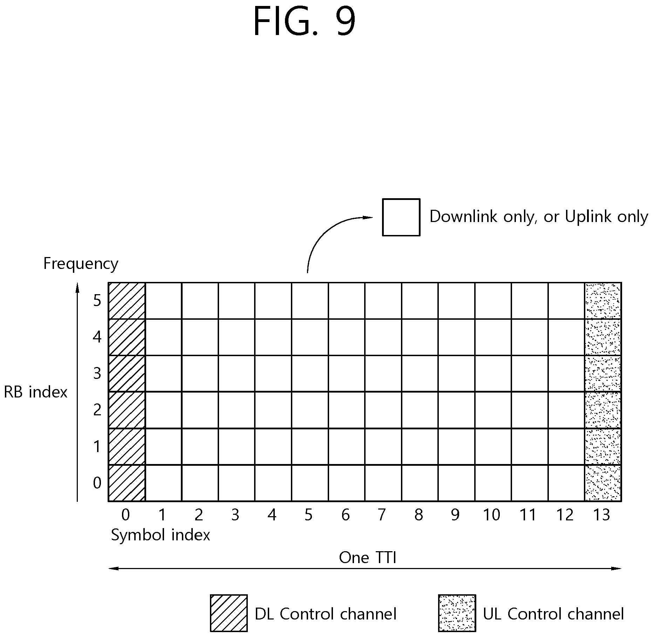

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

In FIG. 9, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

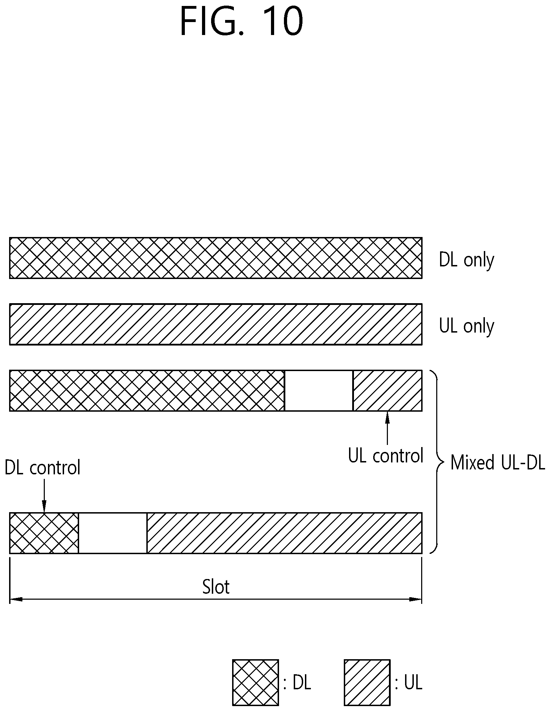

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

1. DL only configuration,
2. UL only configuration,
3. Mixed UL-DL configuration:

DL region + Guard period (GP) + UL control region,
DL control region + GP + UL region.
DL region: (i) DL data region, (ii) DL control region + DL data region.
UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of $5 \times 5$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

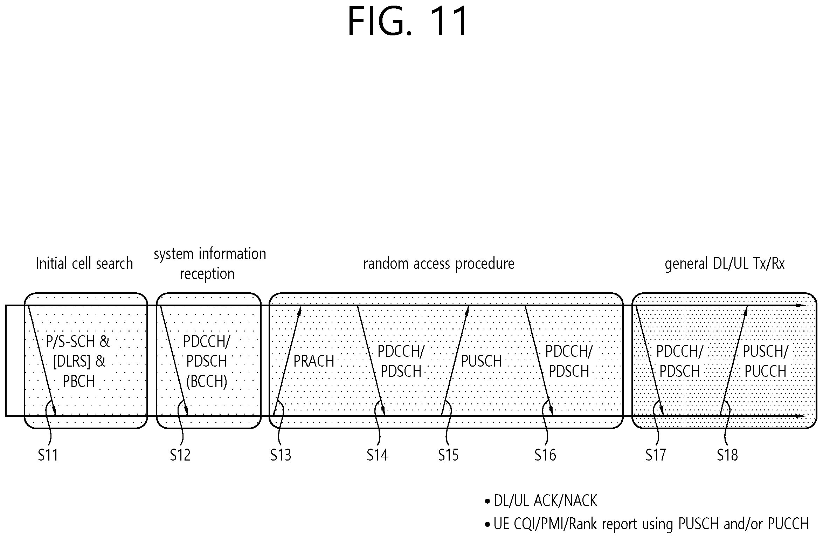

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

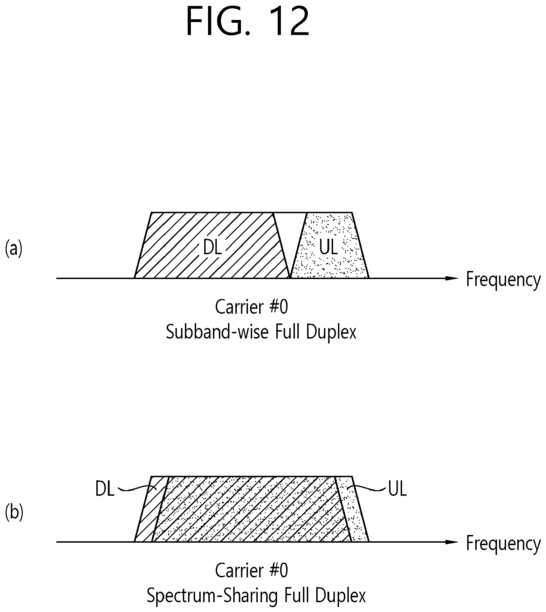

FIG. 12 shows examples of how to apply full duplex within an intra-carrier.

Referring to FIG. 12, the full duplex method includes subband-wise full duplex (hereinafter referred to as SB-FD) as shown in (a) of FIG. 12 and spectrum sharing full duplex (hereinafter referred to as SS-FD as shown in (b) of FIG. 12 may be considered.

In the case of SB-FD, DL and UL are transmitted and received through different frequency resources within the same carrier (e.g., carrier #0). That is, different frequency resources are used in DL and UL for the same time resource.

In the case of SS-FD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SB-FD or SS-FD operations can be performed on time resources that perform full duplex operations.

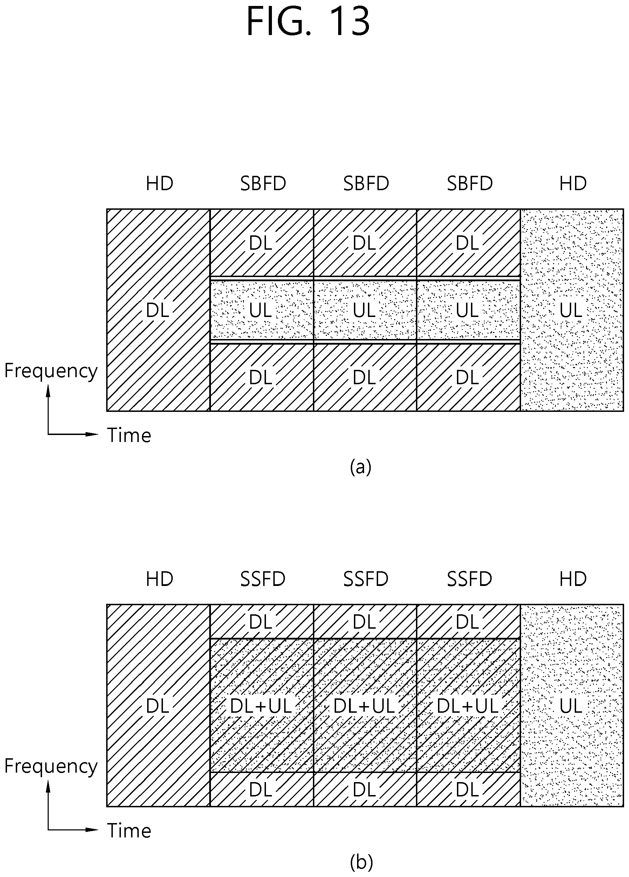

FIG. 13 shows an example in which a time resource operating in half duplex (HD) and a time resource operating in full duplex (FD) such as SB-FD or SS-FD exist together.

In (a) of FIG. 13, some time resources operating as SB-FD (=SBFD) are indicated as SBFD, and time resources operating as HD are indicated as HD. In (b) of FIG. 13, some time resources operating as SS-FD (=SSFD) are indicated as SSFD, and time resources operating as HD are indicated as HD. The unit of time resource may be, for example, a slot or symbol.

In time resources operating as SB-FD, some frequency resources are used as DL resources, and other frequency resources are used as UL resources. Between the DL frequency resource and the UL frequency resource, there may be a guard sub-band that is unused and empty for both DL and UL. Guard subbands may also be referred to by other terms, such as guard frequency resources or guard subcarrier(s).

In time resources operating with SS-FD, the entire frequency resource can be used for both DL and UL. Or, to reduce the impact of interference from other adjacent carriers (this may be referred to as ACI (adjacent carrier interference)), Some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operate as HD is referred to as a HD slot, and a slot resource that operate as SB-FD and a slot resource that operate as SS-FD are referred to as a SB-FD slot and a SS-FD slot, respectively. The SS-FD slot and the SS-FD slot are also collectively referred to as FD slots.

In the present disclosure, in time resources operating in FD, among all frequency resources, frequency resources operating in DL are referred to as a DL subband, and frequency resources operating in UL are also referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

Based on the above discussion, this disclosure proposes a method for setting up downlink (DL) and uplink (UL) resources for intra-carrier full duplex operation.

In the following, the term network may be interpreted as gNB or CU/DU. The term UE may also be interpreted as MT of an IAB-node.

A. Characteristics of DL/UL time/frequency resources for SB-FD and SS-FD operation

This disclosure assumes that a cell (base station) can perform both DL transmission and UL reception in the same time resource in an FD scheme such as SB-FD or SS-FD. For example, the base station may perform HD operation in a first time resource and FD operation in a second time resource (which may be a time resource other than the first time resource).

The first time resource performing HD operation performs DL operation or UL operation across the frequency resources that comprise the entire system bandwidth. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the network performs DL operations through all or part of the frequency resources (first frequency resources) among the frequency resources that constitute the system band of the cell, and performs UL operations through all or part of the frequency resources (second frequency resources).

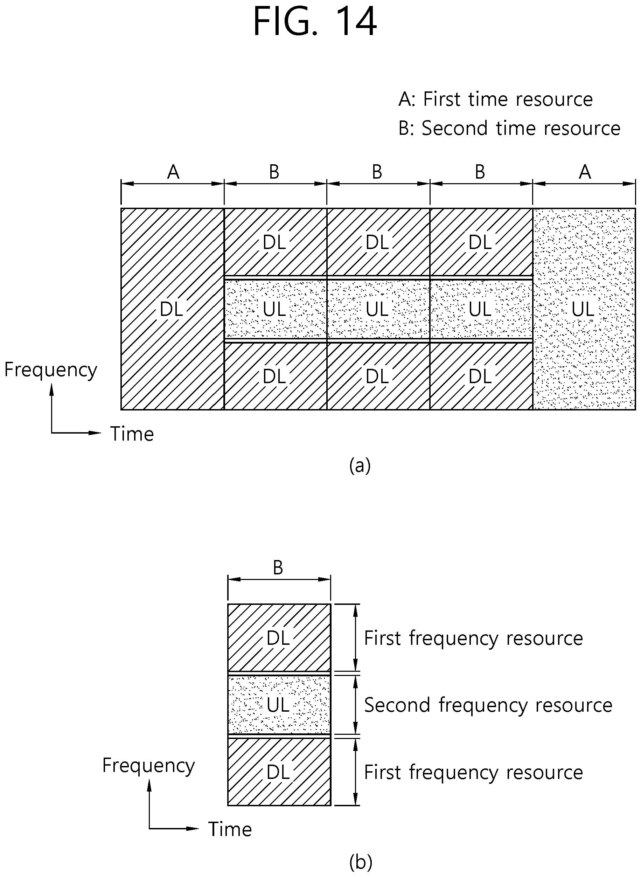

FIG. 14 shows examples of a first time resource, a second time resource, a first frequency resource, and a second frequency resource.

Referring to (a) of FIG. 14, the first time resource (represented by A) operates in HD. In the second time resource (represented by B), for example, it can operate as SB-FD. In the first time resource, the resource indicated by DL corresponds to the above-described 1-1 time resource, and the resource indicated by UL corresponds to the above-described 1-2 time resource.

Referring to (b) of FIG. 14, in the second time resource, the frequency resource operating as DL corresponds to the above-described first frequency resource, and the frequency resource operating as UL corresponds to the above-described second frequency resource.

The first frequency resource and/or the second frequency resource may have all or some of the following characteristics.

1) When performing SB-FD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SS-FD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SB-FD operation, the second frequency resource may be composed of contiguous frequency resources, and the first frequency resource may be composed of non-contiguous frequency resources. At this time, the first frequency resource may be composed of a plurality (e.g.,two) set of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of a plurality (e.g.,two) set of contiguous frequency resources. This is to reduce interference from DL transmission on UL resources in adjacent carriers by placing the second frequency resource used for DL at the center of the frequency resources constituting the cell.

4) When performing SS-FD operation, the second frequency resource may be composed of some frequency resources of the first frequency resource. At this time, the second frequency resource may be configured to have fewer X physical resource blocks (PRBs) on one or both edges than the first frequency resource. This is to reduce interference from DL transmission on adjacent carriers to UL reception.

The network determines the 'first time resource' and 'second time resource', and the 'first frequency resource' and 'second frequency resource' as described above, and provides all or part of the corresponding information to the UE. The network performs DL transmission to the UE on ' 1-1 time resource within the first time' and 'first frequency resource within the second time resource', and performs UL reception from the UE on '1-2 time resource within the first time resource' and the 'second frequency resource within the second time resource'.

The UE receives all or part of the information about the 'first time resource' and 'second time resource', and the 'first frequency resource' and 'second frequency resource' as described above from the network, and determines the location of the resource. The UE performs DL reception from the network on all or part of the " 1-1 time resource within the first time resource" and the "first frequency resource within the second time resource", and UL transmission to the network on the "1-2 time resource within the first time resource" and the "second frequency resource within the second time resource".

In the following, it is proposed a method for configuring resources for downlink (DL) and uplink (UL) reference signals (RS) for intra-carrier full duplex operation.

In the prior art, frequency resources within a particular band are used for all downlink or all uplink at any given time. Therefore, the UE may determine that the resources set to receive the downlink reference signal (DL RS) or transmit the uplink reference signal (UL RS) are all available for downlink reception or uplink transmission and perform transmission and reception.

On the other hand, in FDR environments such as SB-FD, SS-FD, etc., some frequency resources may not be available for downlinks in the time resource where the cell is operating as a downlink, or some frequency resources may not be available for uplinks in the time resource where the cell is operating as an uplink. In such a case, the resources set for the UE to receive DL RS may be set to avoid unavailable resources for downlink, and the resources set for the UE to transmit UL RS may be set to avoid unavailable resources for uplink. However, if, for example, the FD slot and HD slot are dynamically changed, difficulties may arise in setting the frequency resources of the RS to avoid the unavailable resources.

In view of this, the present disclosure sets the frequency resources of DL RS and UL RS in consideration of the unavailable frequency resources, and proposes a RS transmission and reception method considering these frequency resources.

CSI-RS transmission-related content proposed in this disclosure may include both zero power (ZP) CSI-RS and non-zero power (NZP) CSI-RS.

The CSI-RS proposed in this disclosure may include the following.

  i) CSI-RS for CSI measurement.
  ii) CSI-RS for RRM measurement.
  iii) CSI-RS for time/frequency tracking, TRS: Tracking Reference Signal.

<CSI-RS for CSI measurement>

CSI-RS related configurations (e.g., 'CSI ResourceConfig', 'CSI ReportConfig') for CSI measurement may be, for example, as follows.

'CSI ResourceConfig' can specify what type of reference signal (e.g., nzp-CSI-RS-SSB, csi-IM-Resource) is transmitted. In addition, the type of transmission (periodic, aperiodic, semipersistent) can be set.

'CSI ReportConfig' can specify the 'CSI ResourceConfig' to be used for measurement, and can include a mapping table between the measurement type and the corresponding 'CSR ResourceConfig ID'.

The frequency resource on which the CSI-RS is transmitted may consist of consecutive physical resource block (PRB) resources (i.e., from the RB indicated by 'startingRB' to as many RBs as indicated by 'nrofRBs'), as indicated in the following table.

[Table 5]

```
CSI-FrequencyOccupation information element

-- ASN1START

-- TAG-CSI-FREQUENCYOCCUPATION-START


CSI-FrequencyOccupation ::=          SEQUENCE {
    startingRB                          INTEGER (0..maxNrofPhysicalResourceBlocks-1),
    nrofRBs                             INTEGER (24..maxNrofPhysicalResourceBlocksPlus1),
    ...
}


-- TAG-CSI-FREQUENCYOCCUPATION-STOP

-- ASN1STOP
```

The PRB resources over which CSI-RS is transmitted may be set via the 'CSI-FrequencyOccupation' (see Table 5) within the information element (IE) 'CSI-RS-ResourceMapping'. The UE receives the values 'startingRB' and 'nrofRBs' from the network via 'CSI-FrequencyOccupation'. This allows the UE to determine that a contiguous number of 'nrofRBs' (which may be the number indicated by 'nrofRBs', hereinafter all the same) of PRB resources from the PRB resource location indicated by 'startingRB' constitute the CSI-RS transmission resource.

<CSI-RS for RRM measurement>

CSI-related measurements include the following:

1) CSI-RSRP (Reference Signal Received Power)

CSI-RSRP measurements can be used for connection mode mobility, power control calculations, and beam management. Measurements can be generated and reported at both Layer 1 and Layer 3. For example, a UE may provide CSI-RSRP measurements at Layer 1 when it sends CSI to the base station. Alternatively, the UE may provide CSI-RSRP measurements at Layer 3 when sending RRC measurement reports. CSI-RSRP represents the average power received from a single RE assigned to the CSI-RS. The measurement may be filtered at Layer 1 to remove the effects of noise and improve measurement accuracy.

2) CSI-RSRQ (Reference Signal Received Quality)

CSI-RSRQ measurements can be used in mobility procedures. Unlike the RSRP measurement, the RSRQ measurement may not be used when reporting CSI.
CSI-RSRQ can be defined as CSI-RSRQ = CSI-RSRP/(RSSI/N).
Here, N is the number of resource blocks for which the Received Signal Strength Indicator (RSSI) is measured, i.e., RSSI/N defines the RSSI per resource block. RSSI represents the total received power from all sources, including interference and noise. RSRP and RSSI are measured on the same set of resource blocks. RSSI is measured over the duration of symbols containing CSI RS RE.

3) CSI-SINR (Signal to interference and Noise Ratio)

CSI-SINR can be used in the connection mode mobility procedure. CSI-SINR represents the ratio of the desired signal power to the interference plus noise power. Both the desired signal power and the interference plus noise power are measured at the RE used by the CSI-RS.
Below, the 'CSI-RS-ResourceConfigMobility' information element in Table 6 can be used to set CSI-RS-based RRM measurement.

[Table 6]

```
CSI-RS-ResourceConfigMobility information element
-- ASN1START
-- TAG-CSI-RS-RESOURCECONFIGMOBILITY-START

CSI-RS-ResourceConfigMobility ::=      SEQUENCE {
    subcarrierSpacing                      SubcarrierSpacing,
```

```
        csi-RS-CellList-Mobility          SEQUENCE (SIZE (1..maxNrofCSI-RS-CellsRRM)) OF CSI-RS-
CellMobility,

        ...,
        [[
        refServCellIndex                                                          ServCellIndex
OPTIONAL     -- Need S
        ]]


}

CSI-RS-CellMobility ::=               SEQUENCE {
    cellId                                PhysCellId,
    csi-rs-MeasurementBW                  SEQUENCE {
        nrofPRBs                              ENUMERATED { size24, size48, size96, size192,
size264},
        startPRB                          INTEGER(0..2169)
    },
    density                                                   ENUMERATED {d1,d3}
OPTIONAL,       -- Need R
    csi-rs-ResourceList-Mobility       SEQUENCE (SIZE (1..maxNrofCSI-RS-ResourcesRRM)) OF CSI-
RS-Resource-Mobility
}

CSI-RS-Resource-Mobility ::=         SEQUENCE {
    csi-RS-Index                          CSI-RS-Index,
    slotConfig                            CHOICE {
        ms4                                   INTEGER (0..31),
        ms5                                   INTEGER (0..39),
        ms10                                  INTEGER (0..79),
        ms20                                  INTEGER (0..159),
        ms40                                  INTEGER (0..319)
    },
    associatedSSB                         SEQUENCE {
        ssb-Index                             SSB-Index,
        isQuasiColocated                      BOOLEAN
    }
OPTIONAL, -- Need R
    frequencyDomainAllocation          CHOICE {
        row1                                  BIT STRING (SIZE (4)),
        row2                                  BIT STRING (SIZE (12))
    },
    firstOFDMSymbolInTimeDomain           INTEGER (0..13),
    sequenceGenerationConfig              INTEGER (0..1023),

    ...
}

CSI-RS-Index ::=                     INTEGER (0..maxNrofCSI-RS-ResourcesRRM-1)

-- TAG-CSI-RS-RESOURCECONFIGMOBILITY-STOP
-- ASN1STOP
```

The PRB resource to which CSI-RS for RRM measurement is transmitted is configured via 'csi-rs-MeasurementBW' in 'CSI-RS-CellMobility' in the table above. The UE receives the values of 'startingPRB' and 'nrofPRBs' from the network via 'csi-rs-MeasurementBW'. This enables the UE to determine that 'nrofPRBs' consecutive PRB resources from the PRB resource location indicated by 'startingPRB' constitute the CSI-RS transmission resource.

<CSI-RS for tracking>

In the present disclosure, CSI-RS for tracking may mean tracking reference signal (TRS).

Oscillators are not realistically perfect and can be flawed. Because of this, the device should track and compensate for changes in time and frequency to successfully receive the base station's downlink transmission. To assist the device in this task, a TRS may be configured. The TRS may be a set of resources consisting of a number of periodic non-zero power (NZP)-CSI-RSs. For example, the TRS may comprise CSI-RSs with a certain density located within two consecutive slots. The CRS-RSs within the resource set, i.e., the TRS, may be set at a period of 10, 20, 40, or 80 ms. The set of resource elements (subcarriers and OFDM symbols) used in the TRS may be varied, but there is always a time domain separation of four symbols between two CSI-RSs within a slot. This time domain separation sets a limit on the frequency error that can be tracked. Similarly, frequency domain separation (e.g., separation by four subcarriers) sets a limit on the timing error that can be tracked.

<CSI-RS frequency resource setting/determination method considering unavailable frequency resources>

Hereinafter, CSI-RS may include all of the above-described CSI-RS for CSI measurement, CSI-RS for L1/L3 measurement, and CSI-RS for tracking.

In the prior art, CSI-RS consists of only contiguous PRB resources. Therefore, all or some of the frequency resources on which the CSI-RS is configured to be transmitted in the FD slot may not be included in the first frequency resource that can be used for downlink. It is possible to reuse the existing CSI-RS configuration approach to ensure that the frequency resources comprising CSI-RS are configured to consist of only the first frequency resource in the FD slot, but this may increase the configuration overhead. Additionally, considering the case where the HD slot and the FD slot are dynamically switched, it may be difficult to avoid overlapping the CSI-RS transmission frequency resource in the FD slot with frequency resources other than the first frequency resource.

Hereinafter, in the FD slot, frequency resources other than the first frequency resource that cannot be used for downlink are referred to as 'downlink (DL) unavailable frequency resources'.

This disclosure proposes that the frequency resources constituting the CSI-RS be composed of non-contiguous PRB resources.

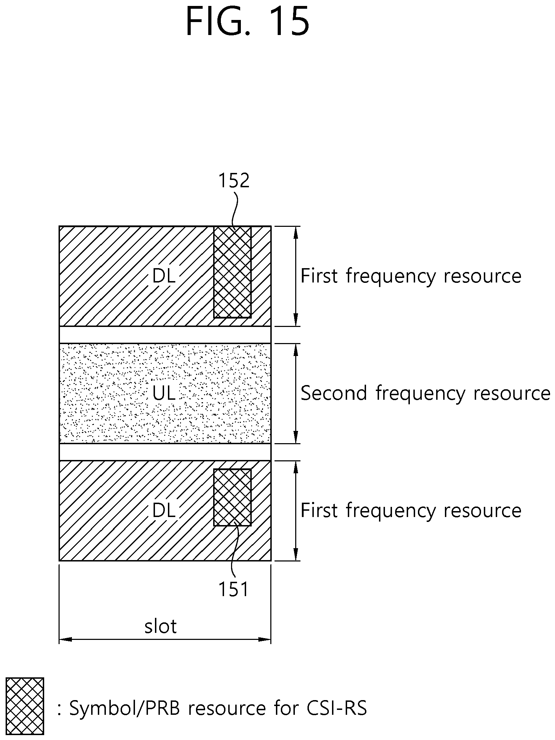

FIG. 15 shows an example of CSI-RS composed of non-contiguous PRB resources.

Referring to FIG. 15, a particular slot may have a mix of first and second frequency resources in the frequency domain. The first frequency resource may be a resource that can be used for downlink, and the second frequency resource may be a resource that cannot be used for downlink, or a frequency resource other than the first frequency resource.

Within the specific slot, resources for CSI-RS may be set for a specific symbol in the time domain and resources for CSI-RS may be set for only PRB resources within the first frequency resource in the frequency domain. As a result, the resources for CSI-RS comprise a non-contiguous set of PRB resources.

In at least one of the methods described herein, the network may configure the PRB resources over which CSI-RS is transmitted, and the UE may determine the PRB resources over which CSI-RS is transmitted. After receiving the CSI-RS from the non-contiguous PRB resources, the UE may perform the CSI measurement by excluding unavailable frequency resources that are not used for downlink in the HD slot.

In the following, a method for setting the frequency (e.g., PRB) resources comprising the CSI-RS, taking into account the unavailable frequency resources of the downlink, and a method for determining the frequency (e.g., PRB) resources comprising the CSI-RS by the UE are proposed.

Method 1. Set up the frequency resources of the CSI-RS with non-contiguous frequency resources.

In the prior art, the frequency resources comprising the CSI-RS are configured as a set of PRBs comprising contiguous PRB resources. For example, a set of PRBs may be configured by means of i) a starting PRB and ii) a number of contiguous PRBs, and CSI-RS may be transmitted within the set of PRBs.

In contrast to this, in the present disclosure, the frequency resources comprising the CSI-RS may comprise a plurality of PRB sets, i.e., the CSI-RS may be transmitted in a plurality of PRB sets, wherein each PRB set comprises a contiguous set of PRB resources, and each PRB set may comprise a different number of PRBs. Further, the PRB resources comprising different PRB sets may be configured to not overlap with each other.

For example, in FIG. 15, of the PRB resources comprising the CSI-RS, the contiguous PRB resources 151 located below the second frequency resource may comprise the first set of PRBs and the contiguous PRB resources 152 located above the second frequency resource may comprise the second set of PRBs. As shown in FIG. 15, the first PRB set and the second PRB set are non-contiguous with respect to each other in the frequency domain. The PRBs in the first PRB set are contiguous in the frequency domain, and the PRBs in the second PRB set are also contiguous in the frequency domain.

For example, in order to set up a plurality of PRB set resources constituting the CSI-RS, 'startingRB' and 'nrofRBs' for a plurality of (e.g. two) sets may be set within 'CSI-FrequencyOccupation' in Table 5. In other words, Table 5 used in the prior art can be changed to Table 7 below in the present disclosure.

[Table 7]

```
CSI-FrequencyOccupation information element

-- ASN1START

-- TAG-CSI-FREQUENCYOCCUPATION-START


CSI-FrequencyOccupation ::=          SEQUENCE {
    startingRB1                          INTEGER (0..maxNrofPhysicalResourceBlocks-1),
    nrofRBs1                             INTEGER (24..maxNrofPhysicalResourceBlocksPlus1),
    startingRB2                          INTEGER (0..maxNrofPhysicalResourceBlocks-1),
    nrofRBs2                             INTEGER (24..maxNrofPhysicalResourceBlocksPlus1),

    ...

}


-- TAG-CSI-FREQUENCYOCCUPATION-STOP

-- ASN1STOP
```

The UE may determine that each set of PRBs is made up of 'nrofRBs' contiguous PRBs from the PRB informed by 'startingRB'. For example, as shown in 'CSI-FrequencyOccupation' in Table 7, if {startingRB1, nrofRBs1} and {startingRB2, nrofRBs2} are set, the UE determines that 'nrofRBs1' contiguous PRB resources from the PRB informed by 'startingRB1' constitute the first PRB set, nrofRBs2 contiguous PRB resources from the PRB informed by 'startingRB2' as the second PRB set, and determines that the first and second PRB sets constitute the PRB resources of the CSI-RS.

As another example, multiple 'CSI-FrequencyOccupation' may be set within a 'CSI-RS-ResourceMapping' to configure the resources of multiple PRB sets that comprise a CSI-RS. Table 8 is a specific example of this.

[Table 8]

```
-- ASN1START
-- TAG-CSI-RS-RESOURCEMAPPING-START

CSI-RS-ResourceMapping ::=              SEQUENCE {
        frequencyDomainAllocation              CHOICE {
            row1                                   BIT STRING (SIZE (4)),
            row2                                   BIT STRING (SIZE (12)),
            row4                                   BIT STRING (SIZE (3)),
            other                                  BIT STRING (SIZE (6))
        },
        nrofPorts                              ENUMERATED {p1,p2,p4,p8,p12,p16,p24,p32},
        firstOFDMSymbolInTimeDomain            INTEGER (0..13),
        firstOFDMSymbolInTimeDomain2           INTEGER(2..12)              OPTIONAL,    -- Need
R
        cdm-Type                               ENUMERATED  {noCDM,  fd-CDM2,  cdm4-FD2-TD2,
cdm8-FD2-TD4},
        density                                CHOICE {
            dot5                                   ENUMERATED {evenPRBs, oddPRBs},
            one                                    NULL,
            three                                  NULL,
            spare                                  NULL
        },
        freqBand1                              CSI-FrequencyOccupation1,
        freqBand2                              CSI-FrequencyOccupation2,

        ...
}

-- TAG-CSI-RS-RESOURCEMAPPING-STOP
-- ASN1STOP
```

In the table above, 'density' indicates the density of CSI-RS resources measured within RE/port/PRB. 'firstOFDMSymbolInTimeDomain' is the time domain allocation within the PRB, and this field indicates the first OFDM symbol within the PRB used for CSI-RS. 'firstOFDMSymbolInTimeDomain2' represents the time domain allocation within the PRB. 'frequencyDomainAllocation' indicates frequency domain allocation within PRB.

'freqBand' is related to the aforementioned 'CSI-FrequencyOccupation'. PRB resources set through each 'CSI-FrequencyOccupation' may mean PRB resources constituting each PRB set. Each 'CSI-FrequencyOccupation' sets contiguous PRB resources, and the UE can determine the PRB sets configured through a plurality of 'CSI-Frequency-Occupation' as PRB resources constituting the CSI-RS.

As exemplified in Table 8, if 'CSI-FrequencyOccupation1' and 'CSI-FrequencyOccupation2' are set in 'CSI-RS-ResourceMapping', the UE determines that the PRB resources informed by 'CSI-FrequencyOccupation1' and the PRB resources informed by 'CSI-FrequencyOccupation2' constitute the PRB resources of CSI-RS.

For CSI-RS for RRM measurement, 'startingPRBs' and 'nrofPRBs' for multiple (e.g., two) sets of PRBs may be set in 'csi-rs-MeasurementBW' in Table 6 to configure the resources of the multiple PRB sets to which CSI-RS is transmitted. In this case, the UE may determine that each set of PRBs comprises contiguous 'nrofPRBs' PRBs from the PRB indicated by 'startingPRB'.

For example, if {startingPRB 1, nrofPRBs1} and {startingPRB2, nrofPRBs2} are set within 'csi-rs-Measurement-BW', the UE shall determine that i) the PRBs 'nrofPRBs1' contiguous PRB resources from the PRB indicated by 'startingPRB1' constitute the first PRB set and ii) the PRBs 'nrofPRBs2' contiguous PRB resources from the PRB indicated by 'startingPRB2' constitute the second PRB set, and that the first and second PRB sets constitute the PRB resources of the CSI-RS.

As another example, in the case of CSI-RS for RRM measurement, multiple 'csi-rs-MeasurementBWs' may be set up within 'CSI-RS-CellMobility' to set up multiple PRB set resources comprising CSI-RS. In this case, the PRB resources set via each 'csi-rs-MeasurementBW' may refer to the PRB resources comprising each PRB set. In other words, each 'csi-rs-MeasurementBW' configures contiguous PRB resources, and the UE can determine the set of PRBs configured by multiple 'csi-rs-MeasurementBWs' as the PRB resources that constitute the CSI-RS. For example, if 'csi-rs-MeasurementBW1' and 'csi-rs-MeasurementBW2' are set within 'CSI-RS-CellMobility', the UE determines that the PRB resources informed by 'csi-rs-MeasurementBW1' (first set of PRBs) and the PRB resources informed by 'csi-rs-MeasurementBW2' (second set of PRBs) constitute the PRB resources of CSI-RS.

Using these methods, the network can set the frequency resources of the CSI-RS so that they do not include the unavailable frequency resources of the downlink.

Method 2. Set frequency resources not included in CSI-RS PRB resources.

Conventionally, the frequency resource constituting the CSI-RS (frequency resource on which the CSI-RS is transmitted) is configured as one PRB set composed of contiguous PRB resources, but in the present disclosure, it is proposed to include information about PRB resources that are not included in the CSI-RS transmission frequency resource when setting the PRB resources comprising the CSI-RS.

That is, when setting up the CSI-RS, information for frequency resource excluded from the configuration of the CSI-RS can be set (explicitly/implicitly) along with the frequency resources that make up the CSI-RS. The UE may determine that among the PRB resources constituting the CSI-RS, PRB resources excluding frequency resources excluded from the configuration of the CSI-RS are actually used for transmission of the CSI-RS.

For example, within 'CSI-FrequencyOccupation' or within 'CSI-RS-ResourceMapping', information about PRB resources that are excluded from CSI-RS transmission may be set together. The PRB resources that are excluded from CSI-RS transmission may consist of contiguous frequency PRB resources from a particular PRB resource.

For CSI-RS for RRM measurements, information about PRB resources that are excluded from CSI-RS transmission may be set together, e.g. within 'csi-rs-MeasurementBW' or within 'CSI-RS-CellMobility'. The PRB resources that are excluded from CSI-RS transmission may consist of contiguous frequency PRB resources from a particular PRB resource.

The setting of PRB resources excluded from CSI-RS transmission does not necessarily mean that they are excluded from CSI-RS transmission frequency resources, i.e., depending on the need/circumstance, the UE may exclude PRB resources excluded from CSI-RS transmission from CSI-RS transmission frequency resources only in some time resources.

For example, the UE may determine the resources set by 'startingRB' and 'nrofRBs' of 'CSI-FrequencyOccupation' as CSI-RS transmission frequency resources without considering the PRB resources that are excluded from CSI-RS transmission in the time resources set (or not set) by the network, and determine the actual CSI-RS transmission frequency resources by excluding the PRB resources that are excluded from CSI-RS transmission from the CSI-RS transmission frequency resources in the remaining time resources.

Alternatively, for example, the determination of CSI-RS transmission frequency resources in an FD slot may be different from that in an HD slot. In HD slots, the resource set by 'CSI-FrequencyOccupation' is determined as the CSI-RS transmission frequency resource without considering the PRB resources that are excluded from CSI-RS transmission, while in FD slots, the PRB resources that are excluded from CSI-RS transmission are excluded from the CSI-RS transmission frequency resource to determine the transmission frequency resource of CSI-RS.

Method 3. Determine the PRB resources of CSI-RS by excluding unavailable frequency resources (downlink unavailable frequency resources) that are not used for downlink.

In this method, the setting method for the frequency resources constituting the CSI-RS maintains the existing method, but the UE determines the PRB resource on which the CSI-RS is transmitted by excluding unavailable frequency resources not used for downlink.

For example, the UE shall consider/assume/determine that PRB resources which overlap with the DL unavailable frequency resources, among PRB resources configured by 'CSI-FrequencyOccupation' and/or 'csi-rs-MeasurementBW' for the transmission of the CSI-RS, are excluded from PRB resources over which the CSI-RS is transmitted (i.e., they are not used for the transmission of the CSI-RS).

Alternatively, the UE may determine that no CSI-RS is transmitted in a given time resource (e.g., slot) if the frequency resource comprising the CSI-RS overlaps with an unavailable frequency resource that is not being used for downlink.

For example, the UE may determine downlink unavailable frequency resources as follows.

1) Information about the downlink unavailable frequency resource, which is the frequency resource that is not used for downlink in the FD slot, may be set by the network through signals such as system information and RRC. This configuration information enables the UE to determine the downlink unavailable frequency resource.

2) Information about the first frequency resource, which is the frequency resource used for downlink in the FD slot, may be set from the network through signals such as system information, RRC, etc. The UE may determine that the frequency resources other than the first frequency resource are the downlink unavailable frequency resource.

3) Information about the second frequency resource, which is the frequency resource used for uplink in the FD slot, may be configured from the network through signals such as system information, RRC, etc. The UE may determine that the second frequency resource is the downlink unavailable frequency resource.

In an FD slot, a guard frequency resource may exist between the first frequency resource used for downlink and the second frequency resource used for uplink. In such a case, the UE may determine that the second frequency resource and the guard frequency resource are the downlink unavailable frequency resource.

4) Contiguous/non-contiguous frequency resources comprising the bandwidth part (BWP) may be configured by the network. For the currently operating BWP, the UE may determine that the frequency resources that do not constitute the BWP are downlink unavailable frequency resources, i.e., the frequency resources other than the frequency resources that constitute the BWP are excluded from the PRB resources that constitute the CSI-RS.

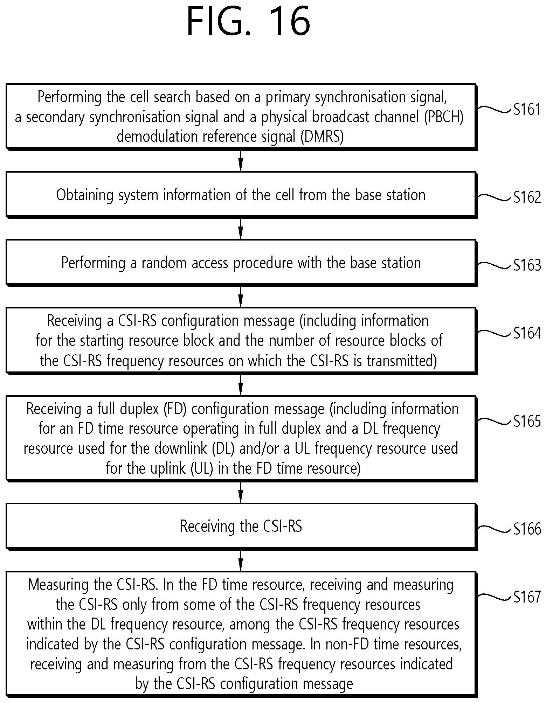

FIG. 16 is an example of a method of operating a UE in a wireless communication system.

The method of FIG. 16 may be a specific example of applying method 3 described above.

Referring to FIG. 16, the UE performs a cell search (S 161). Specifically, the cell search may be a procedure wherein the UE obtains time and frequency synchronisation with a cell and detects a cell identity of the cell. The UE may perform the cell search based on a primary synchronisation signal, a secondary synchronisation signal and a physical broadcast channel (PBCH) demodulation reference signal (DMRS) of the cell.

The UE obtains system information of the cell from the base station (S162).

The UE performs a random access procedure with the base station (S163). The random access procedure may comprise: i) the UE transmitting a random access preamble to the base station; ii) receiving a random access response from the base station; iii) performing a scheduled transmission using a scheduled uplink grant from the random access response; and iv) receiving a contention resolution message.

The UE receives a channel state information reference signal (CSI-RS) configuration message (S164). The CSI-RS configuration message may indicate the starting resource block and the number of resource blocks of the CSI-RS frequency resources on which the CSI-RS is transmitted. For example, as described in Table 5, the starting resource block and number of resource blocks of the CSI-RS frequency resources may be provided.

The UE receives a full duplex (FD) configuration message (S165). The full duplex configuration message may indicate an FD time resource operating in full duplex and a DL frequency resource used for the downlink (DL) and/or a UL frequency resource used for the uplink (UL) in the FD time resource (i.e., at least one of a DL frequency resource used for the downlink (DL) and a UL frequency resource used for the uplink (UL) in the FD time resource).

The full duplex (FD) configuration message may, for example, explicitly indicate the UL frequency resource (UL subband) and the DL frequency resource (DL subband) in the FD time resource, but may also indicate only the UL frequency resource (UL subband). The UE may then implicitly determine that the remaining frequency resources other than the UL frequency resource (UL subband) are DL frequency resources.

Alternatively, the full duplex (FD) configuration message may only indicate the DL frequency resource (DL subband) in the FD time resource, and the UE may implicitly determine that the remaining frequency resources other than the DL frequency resource (DL subband) are UL frequency resources.

Alternatively, the full duplex configuration message may indicate (configure) 1) an FD time resource operating in full duplex and/or 2) a time resource in which a UL frequency resource (UL subband) used for uplink and/or a DL frequency resource (DL subband) used for downlink are present. In this case, the UE may determine 1) the FD time resource operating in full duplex as the FD time resource, or 2) the time resource for which the UL subband (DL subband) is configured as the FD time resource.

The UE receives the CSI-RS (S166) and measures the CSI-RS (S167).

In measuring the CSI-RS, the UE, in the FD time resource, receives and measures the CSI-RS only from some of the CSI-RS frequency resources within the DL frequency resource, among the CSI-RS frequency resources indicated by the CSI-RS configuration message. In non-FD time resources, the CSI-RS is received and measured from the CSI-RS frequency resources indicated by the CSI-RS configuration message.

The full duplex configuration message may, according to an embodiment, include information about DL unavailable frequency resources, which are frequency resources not used for downlink. The UE may assume that, among the CSI-RS frequency resources, no CSI-RS is transmitted in the resources overlapping the DL unavailable frequency resources, and may only receive/measure the CSI-RS in the remaining resources. Alternatively, the UE may operate assuming that the CSI-RS is not transmitted in a time unit (e.g., slot or subframe) that includes resources that overlap with the DL unavailable frequency resources among the CSI-RS frequency resources.

In some embodiments, the UE may determine that the frequency resources other than the DL frequency resources indicated by the full duplex configuration message are DL unavailable frequency resources. In this case, the UE may operate assuming that no CSI-RS is transmitted on any of the CSI-RS frequency resources indicated by the CSI-RS configuration message that overlap with the DL unavailable frequency resources. Alternatively, the UE may operate assuming that the CSI-RS is not transmitted in the slot containing the resource overlapping with the DL unavailable frequency resource among the CSI-RS frequency resources.

In some embodiments, the UE may determine that the UL frequency resource indicated by the full duplex configuration message is a DL unavailable frequency resource. In this case, the UE may operate assuming that no CSI-RS is transmitted on any of the CSI-RS frequency resources indicated by the CSI-RS configuration message that overlap with the DL unavailable frequency resources. Alternatively, the UE may operate assuming that the CSI-RS is not transmitted in the slot containing the DL unavailable frequency resource among the above CSI-RS frequency resources.

According to an embodiment, the UE may receive information from the base station about the frequency resources comprising the bandwidth part (BWP) and may determine that in the particular BWP in which the UE is currently operating, the remaining frequency resources other than the frequency resources comprising the BWP are DL unavailable frequency resources. In this case, the UE may operate assuming that the CSI-RS is not transmitted in the resources overlapping the DL unavailable frequency resources, or may operate assuming that the CSI-RS is not transmitted in the slots containing resources overlapping the DL unavailable frequency resources among the CSI-RS frequency resources.

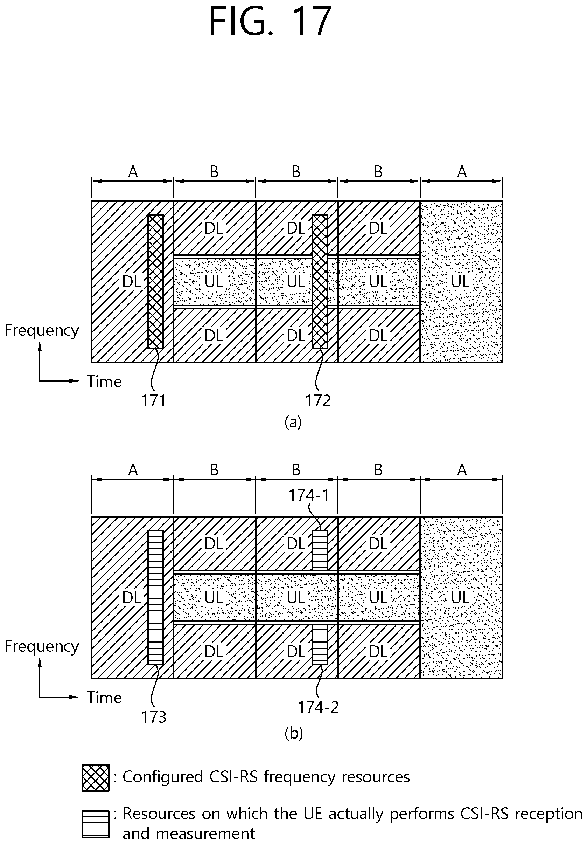

FIG. 17 illustrates the CSI-RS frequency resources for which the UE is configured and the resources for which the UE actually performs CSI-RS reception and measurement.

Referring to (a) of FIG. 17, the UE may be configured with CSI-RS frequency resources 171, 172 having specific periods. Among the CSI-RS frequency resources, the first CSI-RS frequency resource 171 may be located in an HD slot (DL resource) operating in half-duplex, and the second CSI-RS frequency resource 172 may be located in an FD slot (DL resource and UL resource coexist) operating in full-duplex.

In such a case, the UE does not perform CSI-RS reception and measurement at a CSI-RS frequency resource that overlaps with a DL unavailable frequency resource, as shown in (b) of FIG. 17. That is, among the CSI-RS frequency resources, the third CSI-RS frequency resource 173 is located within the HD slot (DL resource) operating in half duplex, and thus receives and measures CSI-RS at the third CSI-RS frequency resource 173. On the other hand, within the FD slot operating in full duplex (DL resources and UL resources coexist), CSI-RS can be received and measured from the remaining resources 174-1, 174-2, excluding the resources that overlap with DL unavailable frequency resources (e.g., UL resources and guard frequency resources) among the configured CSI-RS frequency resources.

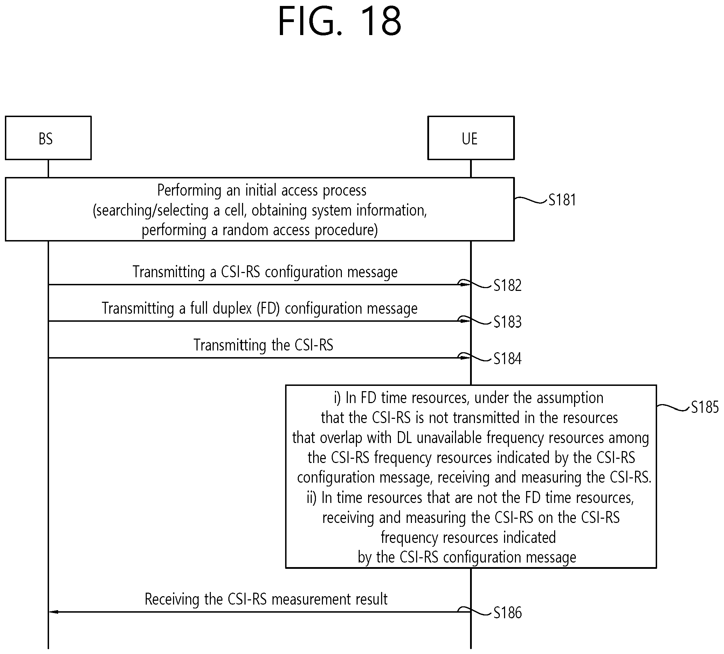

FIG. 18 illustrates the operation between the base station and the UE.

FIG. 18 illustrates the operation between the base station and the UE.

Referring to FIG. 18, the base station performs an initial access process with the UE (S181). For example, after searching/selecting a cell of the UE and obtaining system information, the base station performs a random access procedure with the UE. The random access procedure may include: i) the base station receiving a random access preamble from the UE, ii) the base station transmitting a random access response to the UE, iii) the base station receiving a transmission from the UE scheduled by the uplink grant included in the random access response, and iv) the base station transmitting a contention resolution message to the UE.

The base station transmits a CSI-RS configuration message to the UE (S182). The CSI-RS configuration message indicates the starting resource block and the number of resource blocks of the CSI-RS frequency resources to which CSI-RS is transmitted.

The base station transmits a full duplex (FD) configuration message to the UE (S183). For example, the full duplex configuration message may indicate (configure) an FD time resource operating in full duplex and at least one of a DL frequency resource used for a downlink (DL) and a UL frequency resource used for an uplink (UL) in the FD time resource.

Alternatively, the full duplex configuration message may inform 1) FD time resources operating in full duplex and/or 2) a time resource in which UL frequency resources (UL subband) used for uplink and/or DL frequency resources (DL subband) used for downlink exist. In this case, the UE may determine 1) the FD time resource operating in full duplex as the FD time resource, or 2) the time resource for which the UL subband (DL subband) is configured as the FD time resource.

The base station transmits the CSI-RS to the UE (S184).

The UE performs the CSI-RS reception and measurement according to the corresponding method in FD time resources and non-FD time resources (S185). For example, the UE may: i) in FD time resources, assume that the CSI-RS is not transmitted in the resources that overlap with DL unavailable frequency resources among the CSI-RS frequency resources indicated by the CSI-RS configuration message, and receive and measure the CSI-RS in the remaining resources. On the other hand, ii) for time resources that are not FD time resources, the CSI-RS shall be received and measured on the CSI-RS frequency resources indicated by the CSI-RS configuration message.

The base station receives the CSI-RS measurement result from the UE (S186).

According to the method described in FIGS. 16 to 18, depending on whether it is a time slot operating as SB-FD or not, the UE receives/measures CSI-RS in different frequency bands for the same CSI-RS setting. In a system operating with SB-FD, appropriate CSI-RS reception and measurement can be performed without changing the existing CSI-RS configuration method.

The methods described in FIGS. 16 to 18 enable a UE to receive/measure CSI-RS on a non-contiguous frequency resource in a system supporting full duplex operation, without changing the existing CSI-RS settings of an existing system, for example, supporting only half duplex operation. This increases ease of implementation and reduces the impact of standard specification changes.

On the other hand, the aforementioned downlink unavailable frequency resources may not always be applied to the determination of CSI-RS transmission frequency resources. Depending on the need/circumstance, the UE may only consider the downlink unavailable frequency resources in some time resources to determine the CSI-RS transmission frequency resources.

For example, the UE may determine the resource set by 'CSI-FrequencyOccupation' and/or 'csi-rs-MeasurementBW' as the CSI-RS transmission frequency resource without considering the DL unavailable frequency resources in the time resource set (or not set) by the network, and determine the CSI-RS transmission frequency resource and whether to transmit in the remaining time resource by considering whether the DL unavailable frequency resources and the CSI-RS transmission frequency resources overlap.

Alternatively, for example, the determination of CSI-RS transmission frequency resources in an FD slot and in an HD slot may be applied differently. In HD slots, the resource set by 'CSI-FrequencyOccupation' and/or 'csi-rs-MeasurementBW' is determined to be the CSI-RS transmission frequency resource without considering the DL unavailable frequency resources, while in FD slots, the CSI-RS transmission frequency resource and whether it is transmitted or not is determined by considering whether the DL unavailable frequency resources and the CSI-RS transmission frequency resource overlap.

Alternatively, the network may set together at the time of CSI-RS configuration whether the UE shall: i) determine the resources set by 'CSI-FrequencyOccupation' and/or 'csi-rs-MeasurementBW' as CSI-RS transmission frequency resources without considering the downlink unavailable frequency resources, or ii) determine the CSI-RS transmission frequency resources by considering the downlink unavailable frequency resources. Based on these settings, the UE can determine how to treat downlink unavailable frequency resources in CSI-RS transmission frequency resources.

<Method for setting/determining frequency resources of SRS (sounding reference signal)>

The frequency resources available for uplink transmission in the FD slot and HD slot may be different. In such cases, it is possible to reuse the existing CSI-RS setup method to set up the CSI-RS resources so that the frequency resources comprising CSI-RS consist of only the second frequency resource in the FD slot, but this may increase the configuration overhead. Additionally, considering the case where the HD slot and the FD slot are dynamically switched, it may be difficult to avoid overlapping the CSI-RS transmission frequency resource with a frequency resource other than the second frequency resource in the FD slot.

In the following, a method for setting the PRB resources comprising the SRS considering the uplink unavailable frequency resources and a method for determining the PRB resources comprising the SRS by the UE are proposed.

Method 1. Method of setting frequency resources that are not included in PRB resources of SRS.

When setting the frequency resources constituting the SRS (frequency resources on which the SRS is transmitted), it is proposed to include information about PRB resources that are not included in the SRS transmission frequency resources.

For example, when setting SRS transmission resources through the information element 'SRS-Resource', information for frequency resource excluded from the configuration of SRS can be set (explicitly/implicitly) along with the frequency resources constituting the SRS.

Based on the SRS settings, the UE determines the actual transmission frequency resources of the SRS by considering the position of 'frequency resources excluded from the composition of the SRS' in 'frequency resources comprising the SRS'.

The position of the frequency resources excluded from the SRS configuration may be constant regardless of the frequency hopping of the SRS. Therefore, the number of PRB resources used for the actual transmission of the SRS may vary depending on the position of the frequency hop of the SRS. In other words, after setting 'SRS-Resource' and applying frequency hopping, determine the frequency resource through which SRS is transmitted in a specific time resource, the actual transmission frequency resource of the SRS can be determined by considering the transmission frequency resource of the SRS and the location of the frequency resource excluded from the composition of the SRS.

For example, if, after setting the transmission frequency resources of the SRS and applying frequency hopping, all or part of the PRB resources determined to transmit the SRS overlap with the frequency resources excluded from the composition of the SRS, the UE may perform the transmission of the SRS only on the remaining frequency resources excluding the frequency resources excluded from the composition of the SRS.

Alternatively, the UE may not perform the transmission of an SRS in a given time resource (e.g., slot) if, after setting the transmission frequency resources of the SRS and applying frequency hopping, all or part of the PRB resources determined to transmit the SRS overlap with frequency resources that are excluded from the composition of the SRS.

The frequency resources excluded from the composition of the SRS may consist of contiguous frequency PRB resources from a specific PRB resource.

The frequency resources excluded from SRS transmission may not always be applied to the determination of SRS transmission frequency resources, i.e., depending on the need/circumstance, the UE may only consider the frequency resources excluded from SRS transmission in some time resources to determine the actual SRS transmission frequency resources.

For example, the UE may determine the actual SRS transmission frequency resource without considering the frequency resource excluded for SRS transmission in the time resource set (or not set) by the network, and determine the actual SRS transmission frequency resource and/or whether SRS is transmitted by considering the frequency resource excluded for SRS transmission in the remaining time resource.

Alternatively, for example, the determination of the SRS transmission frequency resource in the FD slot and the HD slot may be different. In an HD slot, the actual SRS transmission frequency resource may be determined without considering the frequency resources excluded from SRS transmission, while in an FD slot, the actual SRS transmission frequency resource and/or whether SRS is transmitted may be determined by considering the frequency resources excluded from SRS transmission.

Method 2. Method of determining PRB resources of SRS by excluding unavailable frequency resources not used for uplink.

In this method, the setting method for the frequency resources comprising the SRS remains the same, but the UE may determine the PRB resource to which the SRS is transmitted by considering the unavailable frequency resources not used for uplink (uplink unavailable frequency resources).

For example, the UE may determine uplink unavailable frequency resources as follows.

1) Information about the uplink unavailable frequency resource, which is the frequency resource that is not used for uplink in the FD slot, may be set by the network through signals such as system information and RRC. This setting information enables the UE to determine the uplink unavailable frequency resource.

2) Information about the second frequency resource, which is the frequency resource used for uplink in the FD slot, may be set from the network through signals such as system information, RRC, etc. The UE may determine that frequency resources other than these second frequency resources are uplink unavailable frequency resource.

3) Information about the first frequency resource, which is the frequency resource used for downlink in the FD slot, may be configured from the network through signals such as system information, RRC, etc. The UE may determine that the first frequency resource is the uplink unavailable frequency resource.

In an FD slot, a guard frequency resource may exist between the first frequency resource used for downlink and the second frequency resource used for uplink. In such a case, the UE may determine that the first frequency resource and the guard frequency resource are the uplink unavailable frequency resource.

4) The contiguous/non-contiguous frequency resources comprising the BWP may be configured by the network. For the currently operating BWP, the UE may determine that the frequency resources that do not constitute the BWP are unavailable frequency resources for the uplink. That is, the UE determines that the frequency resources other than the frequency resources which constitute the BWP are excluded from the PRB resources which constitute the SRS.

The UE determines the actual transmission frequency resource of the SRS by considering the position of the uplink unavailable frequency resource among the PRB resources determined to transmit the SRS by the SRS setting. In this case, the position of the uplink unavailable frequency resource may be constant regardless of the frequency hopping of the SRS. Therefore, the number of PRB resources used for transmission of the actual SRS may vary depending on the location of the frequency hops of the SRS.

In other words, after setting 'SRS-Resource' and applying frequency hopping, determine the frequency resource through which SRS is transmitted in a specific time resource, the actual transmission frequency resource of the SRS can be determined by considering the location of the transmission frequency resource of the corresponding SRS and the unavailable frequency resource of the uplink.

For example, after setting the transmission frequency resources of the SRS and applying frequency hopping, if all or part of the PRB resources determined to transmit the SRS overlap with the unavailable frequency resources of the uplink, the UE shall perform the transmission of the SRS on the remaining frequency resources except the unavailable frequency resources of the uplink among the SRS transmission frequency resources.

Alternatively, after setting the transmission frequency resources of the SRS and applying frequency hopping, the UE may not perform the transmission of the SRS in the corresponding time resource (e.g., slot) if all or part of the PRB resources determined to transmit the SRS overlap with the unavailable frequency resources of the uplink.

Frequency resources that are excluded from SRS transmission may not always be taken into account in the determination of SRS transmission frequency resources. Depending on the need/circumstances, the UE may consider frequency resources excluded from SRS transmission in the determination of SRS transmission frequency resources only in some time resources.

For example, the UE may determine the actual SRS transmission frequency resource without considering the uplink unavailable frequency resource in the time resource set (or not set) by the network, and determine the actual SRS transmission frequency resource and/or whether the SRS is transmitted by considering the uplink unavailable frequency resource in the remaining time resource.

Alternatively, for example, the determination of SRS transmission frequency resources may be applied differently in FD slots and HD slots. In an HD slot, the actual SRS transmission frequency resource may be determined without considering the uplink unavailable frequency resource, while in an FD slot, the actual SRS transmission frequency resource and/or whether SRS is transmitted may be determined by considering the uplink unavailable frequency resource.

When setting up SRS, the network can set whether or not the UE will consider unavailable uplink frequency resources to determine actual SRS transmission frequency resources. Based on this configuration information, the UE can determine how to process uplink unavailable frequency resources in SRS transmission frequency resources.

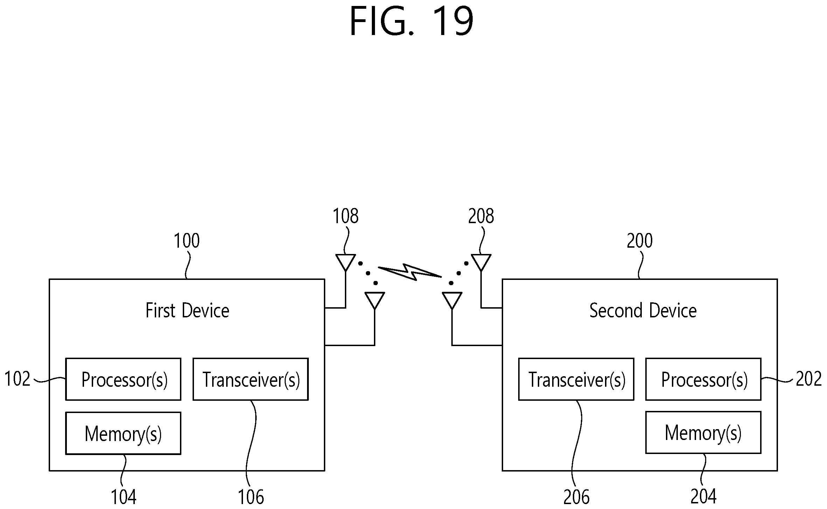

FIG. 19 illustrates a wireless device applicable to the present specification.

Referring to FIG. 19, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: performing a cell search, the cell search being a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell, obtains system information of the cell from a base station, performs a random access procedure with the base station, the random access procedure including i) transmitting a random access preamble to the base station, ii) receiving a random access response from the base station, iii) performing scheduled transmission using a scheduled uplink grant in the random access response, and iv) receiving a contention resolution message, receiving a channel state information reference signal (CSI-RS) configuration message, the CSI-RS configuration message informing a starting resource block and a number of resource blocks of CSI-RS frequency resources through which CSI-RS is transmitted, receiving a full duplex (FD) configuration message, the FD configuration message informing at least one of a FD time resource operating as full duplex, a downlink (DL) frequency resource used for DL, or an uplink (UL) frequency resource used for UL in the FD time resource, receiving the CSI-RS and measuring the CSI-RS. Here, in the FD time resource, the CSI-RS is received and measured only from some CSI-RS frequency resources within the DL frequency resource among the CSI-RS frequency resources informed by the CSI-RS configuration message, and, in time resources other than the FD time resource, the CSI-RS is received and measured from the CSI-RS frequency resources informed by the CSI-RS configuration message.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

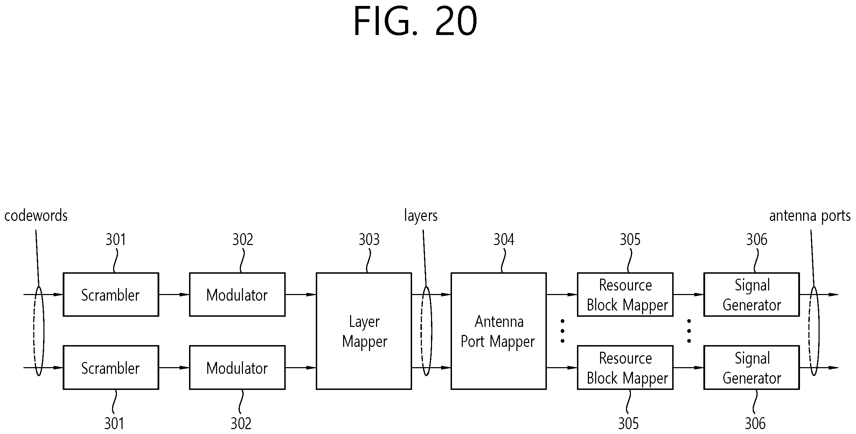

FIG. 20 shows an example of a structure of a signal processing module. Herein, signal processing may be performed in the processors 102 and 202 of FIG. 19.

Referring to FIG. 20, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

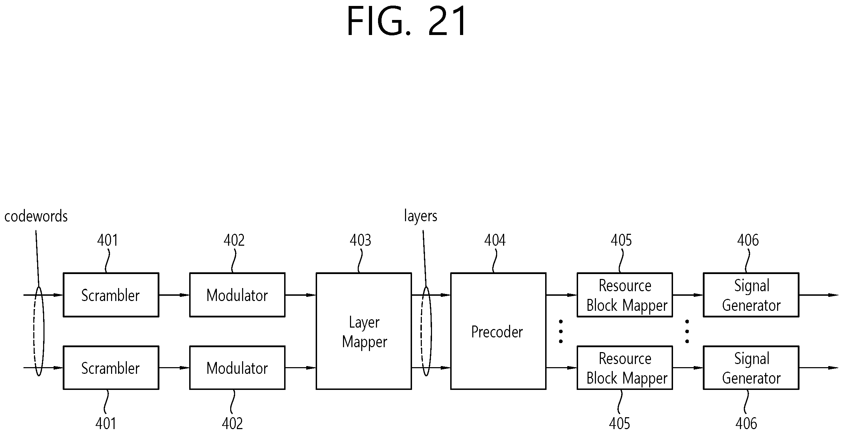

FIG. 21 shows another example of a structure of a signal processing module in a transmitting device. Herein, signal processing may be performed in a processor of a UE/BS, such as the processors 102 and 202 of FIG. 19.

Referring to FIG. 21, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

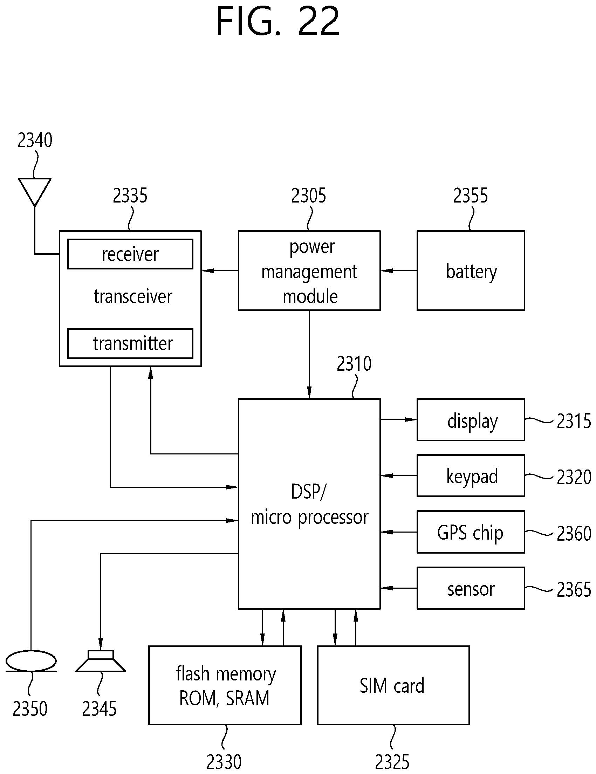

FIG. 22 illustrates an example of a wireless communication device according to an implementation example of the present disclosure.

Referring to FIG. 22, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 22 may be the processors 102 and 202 in FIG. 19.

The memory 2330 is connected to the processor 2310 and stores information related to operations of the processor. The memory may be located inside or outside the processor and connected to the processor through various techniques such as wired connection and wireless connection. The memory 2330 in FIG. 22 may be the memories 104 and 204 in FIG. 19.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 22, various components such as a camera and a universal serial bus (USB) port may be additionally included in the UE. For example, the camera may be connected to the processor 2310.

FIG. 22 is an example of implementation with respect to the UE and implementation examples of the present disclosure are not limited thereto. The UE need not essentially include all the components shown in FIG. 22. That is, some of the components, for example, the keypad 2320, the GPS chip 2360, the sensor 2365 and the SIM card 2325 may not be essential components. In this case, they may not be included in the UE.

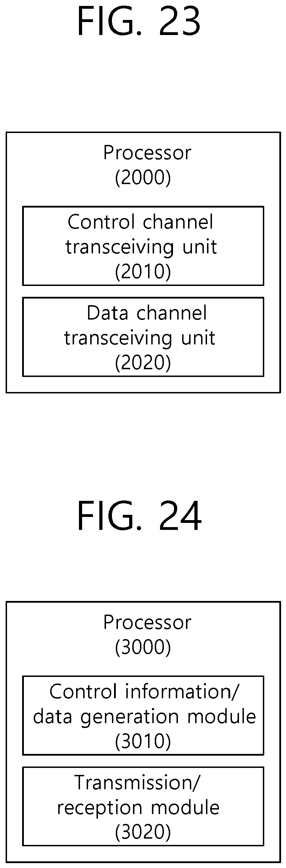

FIG. 23 shows an example of the processor 2000.

Referring to FIG. 23, the processor 2000 may include a control channel transceiving unit 2010 and a data channel transceiving unit 2020. For example, the processor 2000 may execute the methods described in FIGS. 15 to 18 from the UE perspective. For example, the processor 2000 performs a cell search, the cell search being a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell, obtains system information of the cell from a base station, performs a random access procedure with the base station. The random access procedure includes i) transmitting a random access preamble to the base station, ii) receiving a random access response from the base station, iii) performing scheduled transmission using a scheduled uplink grant in the random access response, and iv) receiving a contention resolution message. And the processor 2000 receives a channel state information reference signal (CSI-RS) configuration message, the CSI-RS configuration message informing a starting resource block and a number of resource blocks of CSI-RS frequency resources through which CSI-RS is transmitted, receives a full duplex (FD) configuration message, the FD configuration message informing at least one of a FD time resource operating as full duplex, a downlink (DL) frequency resource used for DL, or an uplink (UL) frequency resource used for UL in the FD time resource. The processor 2000 receives the CSI-RS, and measures the CSI-RS. Here, in the FD time resource, the CSI-RS is received and measured only from some CSI-RS frequency resources within the DL frequency resource among the CSI-RS frequency resources informed by the CSI-RS configuration message, and, in time resources other than the FD time resource, the CSI-RS is received and measured from the CSI-RS frequency resources informed by the CSI-RS configuration message.

The processor 2000 may be an example of the processors 102 and 202 of FIG. 19.

FIG. 24 shows an example of the processor 3000.

Referring to FIG. 24, the processor 3000 may include a control information/data generation module 3010 and a transmission/reception module 3020. The processor 3000 may execute the methods described in FIGS. 15 and 18 from the base station's or network's perspective. For example, the processor 3000 performs a random access procedure with a user equipment (UE), the random access procedure including i) receiving a random access preamble from the UE, ii) transmitting a random access response to the UE, iii) receiving a transmission scheduled by an uplink grant in the random access response from the UE and iv) transmitting a contention resolution message to the UE. And the processor 3000 transmits a channel state information reference signal (CSI-RS) configuration message to the UE, the CSI-RS configuration message informing a starting resource block and a number of resource blocks of the CSI-RS frequency resources to which the CSI-RS is transmitted. The processor 3000 transmits a full duplex (FD) configuration message to the UE, the FD configuration message informing at least one of a FD time resource operating as full duplex, a downlink (DL) frequency resource used for DL, or an uplink (UL) frequency resource used for UL in the FD time resource. The processor 3000 transmits the CSI-RS to the UE and receives a measurement result of the CSI-RS from the UE. The processor 3000, in the FD time resource, transmits the CSI-RS only in some CSI-RS frequency resources within the DL frequency resource among the CSI-RS frequency resources informed by the CSI-RS configuration message, and ,in time resources other than the FD time resource, transmits the CSI-RS in the CSI-RS frequency resources informed by the CSI-RS configuration message.

The processor 3000 may be an example of the processors 102 and 202 of FIG. 19.

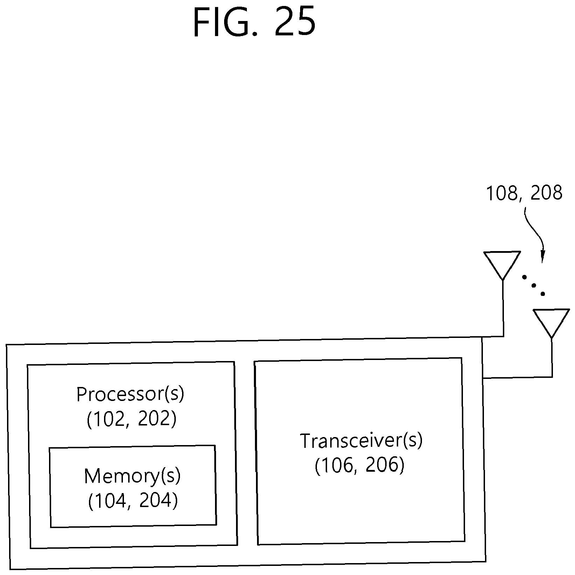

FIG. 25 shows another example of a wireless device.

Referring to FIG. 25, the wireless device may include one or more processors 102 and 202, one or more memories 104 and 204, one or more transceivers 106 and 206 and one or more antennas 108 and 208.

The example of the wireless device described in FIG. 25 is different from the example of the wireless described in FIG. 19 in that the processors 102 and 202 and the memories 104 and 204 are separated in FIG. 19 whereas the memories 104 and 204 are included in the processors 102 and 202 in the example of FIG. 25. That is, the processor and the memory may constitute one chipset.

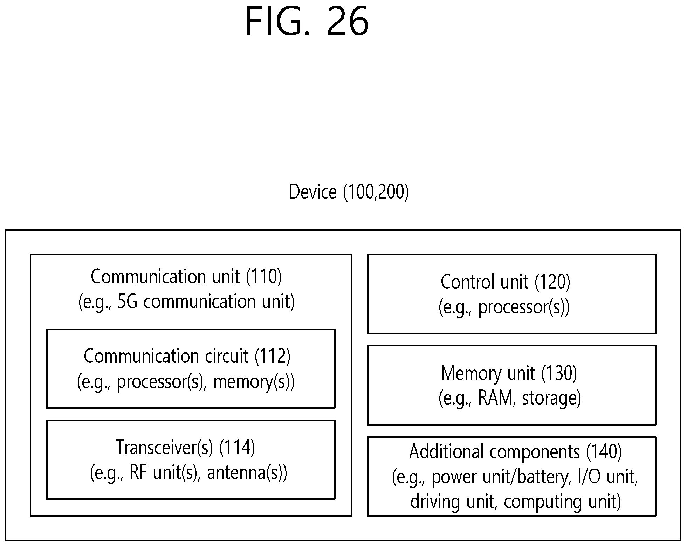

FIG. 26 shows another example of a wireless device applied to the present specification. The wireless device may be implemented in various forms according to a use-case/service.

Referring to FIG. 26, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 34, the vehicles 100b-1, 100b-2 of FIG. 34, the XR device 100c of FIG. 34, the hand-held device 100d of FIG. 34, the home appliance 100e of FIG. 34, the IoT device 100f of FIG. 34, a digital broadcast UE, a hologram device, a public safety device, an MTC device, a medicine device, a fintech device (or a finance device), a security device, a climate/environment device, the AI server/device 400 of FIG. 34, the BSs 200 of FIG. 34, a network node, etc. The wireless device may be used in a mobile or fixed place according to a use-example/service.

In FIG. 26, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory, volatile memory) and/or a combination thereof.

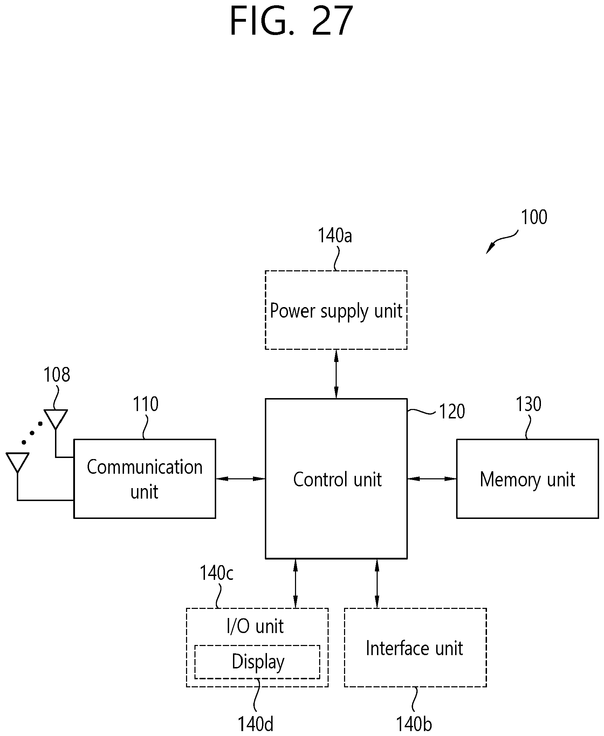

FIG. 27 illustrates a hand-held device applied to the present specification. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 27, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c respective correspond to the blocks 110 to 130/140 of FIG. 26.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. In addition, the memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

For example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. In addition, the communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

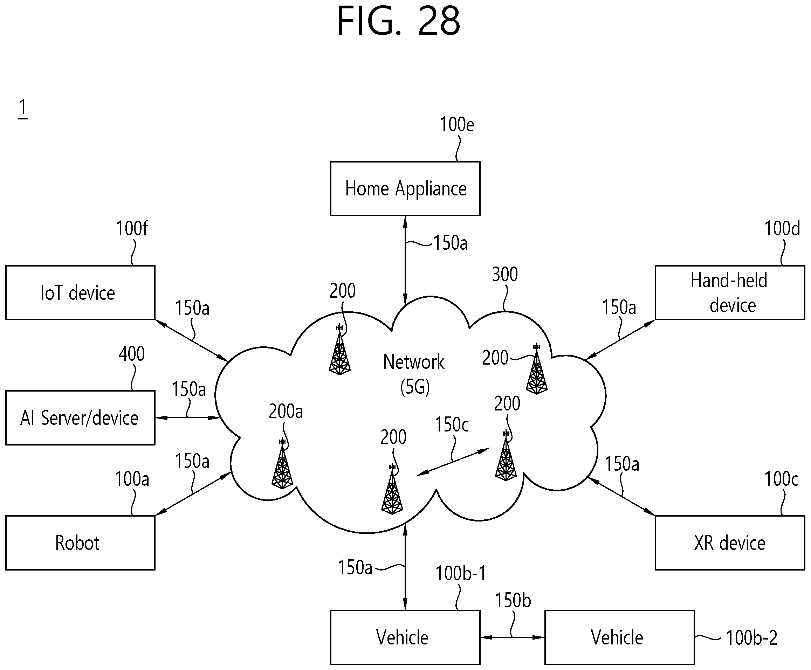

FIG. 28 illustrates a communication system 1 applied to the present specification.

Referring to FIG. 28, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., SGNR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 9. For convenience of explanation, among the frequency ranges that are used in an NR system, FR1 may mean a "sub 6GHz range", and FR2 may mean an "above 6GHz range" and may also be referred to as a millimeter wave (mmW).

[Table 9]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 10 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 10]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of operating a user equipment (UE) in a wireless communication system, the method comprising:

    performing a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
    obtaining system information of the cell from a base station;
    performing a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;
    receiving a channel state information reference signal (CSI-RS) configuration message, wherein the CSI-RS configuration message informs a starting resource block and a number of resource blocks of CSI-RS frequency resources through which CSI-RS is transmitted;
    receiving a full duplex (FD) configuration message, wherein the FD configuration message informs at least one of a FD time resource operating as full duplex, a downlink (DL) frequency resource used for DL, or an uplink (UL) frequency resource used for UL in the FD time resource;
    receiving the CSI-RS; and
    measuring the CSI-RS,
    wherein, in the FD time resource, the CSI-RS is received and measured only from some CSI-RS frequency resources within the DL frequency resource among the CSI-RS frequency resources informed by the CSI-RS configuration message, and
    wherein, in time resources other than the FD time resource, the CSI-RS is received and measured from the CSI-RS frequency resources informed by the CSI-RS configuration message.

2. The method of claim 1, wherein the FD configuration message includes information on a DL unavailable frequency resource, which is a frequency resource not used in downlink.

3. The method of claim 2, wherein, in resources that overlap with the DL unavailable frequency resource among the CSI-RS frequency resources, the UE assumes that the CSI-RS is not transmitted.

4. The method of claim 2, wherein, in a slot including a resource that overlaps the DL unavailable frequency resource among the CSI-RS frequency resources, the UE assumes that the CSI-RS is not transmitted.

5. The method of claim 1, wherein frequency resources other than the DL frequency resource are determined to be a DL unavailable frequency resource.

6. The method of claim 5, wherein, in resources that overlap the DL unavailable frequency resource among the CSI-RS frequency resources, the UE assumes that the CSI-RS is not transmitted.

7. The method of claim 5, wherein, in a slot including a resource that overlaps the DL unavailable frequency resource among the CSI-RS frequency resources, the UE assumes that the CSI-RS is not transmitted.

8. The method of claim 1, wherein the UL frequency resource is determined to be a DL unavailable frequency resource.

9. The method of claim 8, wherein, in resources that overlap with the DL unavailable frequency resource among the CSI-RS frequency resources, the UE assumes that the CSI-RS is not transmitted.

10. The method of claim 8, wherein, in a slot including a resource that overlaps the DL unavailable frequency resource among the CSI-RS frequency resources, the UE assumes that the CSI-RS is not transmitted.

**11.** The method of claim 1, wherein information on frequency resources constituting a bandwidth part (BWP) is received from the base station, and

wherein the UE determines that remaining frequency resources excluding frequency resources constituting the BWP from a specific BWP in which the UE is currently operating as a DL unavailable frequency resource.

**12.** The method of claim 11, wherein, in resources that overlap the DL unavailable frequency resource among the CSI-RS frequency resources, the UE assumes that the CSI-RS is not transmitted.

**13.** The method of claim 11, wherein, in a slot including a resource that overlaps the DL unavailable frequency resource among the CSI-RS frequency resources, the UE assumes that the CSI-RS is not transmitted.

**14.** A user equipment (UE), the UE comprising:

a transceiver;
at least one memory; and
at least one processor operably coupled to the at least one memory and the transceiver, wherein the processor is adapted to:

perform a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtain system information of the cell from a base station;
perform a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;
receive a channel state information reference signal (CSI-RS) configuration message, wherein the CSI-RS configuration message informs a starting resource block and a number of resource blocks of CSI-RS frequency resources through which CSI-RS is transmitted;
receive a full duplex (FD) configuration message, wherein the FD configuration message informs at least one of a FD time resource operating as full duplex, a downlink (DL) frequency resource used for DL, or an uplink (UL) frequency resource used for UL in the FD time resource;
receive the CSI-RS; and
measure the CSI-RS,
wherein, in the FD time resource, the CSI-RS is received and measured only from some CSI-RS frequency resources within the DL frequency resource among the CSI-RS frequency resources informed by the CSI-RS configuration message, and
wherein, in time resources other than the FD time resource, the CSI-RS is received and measured from the CSI-RS frequency resources informed by the CSI-RS configuration message.

**15.** The UE of claim 14, wherein the FD configuration message includes information on a DL unavailable frequency resource, which is a frequency resource not used in downlink.

**16.** The UE of claim 15, wherein, in resources that overlap with the DL unavailable frequency resource among the CSI-RS frequency resources, the UE assumes that the CSI-RS is not transmitted.

**17.** The UE of claim 15, wherein, in a slot including a resource that overlaps the DL unavailable frequency resource among the CSI-RS frequency resources, the UE assumes that the CSI-RS is not transmitted.

**18.** The UE of claim 14, wherein frequency resources other than the DL frequency resource are determined to be a DL unavailable frequency resource.

**19.** The UE of claim 18, wherein, in resources that overlap the DL unavailable frequency resource among the CSI-RS frequency resources, the UE assumes that the CSI-RS is not transmitted.

**20.** The UE of claim 18, wherein, in a slot including a resource that overlaps the DL unavailable frequency resource among the CSI-RS frequency resources, the UE assumes that the CSI-RS is not transmitted.

**EP 4 456 467 A1**

21. The UE of claim 14, wherein the UL frequency resource is determined to be a DL unavailable frequency resource.

22. The UE of claim 21, wherein, in resources that overlap with the DL unavailable frequency resource among the CSI-RS frequency resources, the UE assumes that the CSI-RS is not transmitted.

23. The UE of claim 21, wherein, in a slot including a resource that overlaps the DL unavailable frequency resource among the CSI-RS frequency resources, the UE assumes that the CSI-RS is not transmitted.

24. The UE of claim 14, wherein information on frequency resources constituting a bandwidth part (BWP) is received from the base station, and
wherein the UE determines that remaining frequency resources excluding frequency resources constituting the BWP from a specific BWP in which the UE is currently operating as a DL unavailable frequency resource.

25. The UE of claim 24, wherein, in resources that overlap the DL unavailable frequency resource among the CSI-RS frequency resources, the UE assumes that the CSI-RS is not transmitted.

26. The UE of claim 24, wherein, in a slot including a resource that overlaps the DL unavailable frequency resource among the CSI-RS frequency resources, the UE assumes that the CSI-RS is not transmitted.

27. An apparatus of a user equipment (UE), the apparatus comprising:

at least one memory; and
at least one processor operably coupled to the at least one memory,
wherein the processor is adapted to:

perform a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtain system information of the cell from a base station;
perform a random access procedure with the base station, wherein the random access procedure includes i) transmitting a random access preamble to the base station, ii) receiving a random access response from the base station, iii) performing scheduled transmission using a scheduled uplink grant in the random access response, and iv) receiving a contention resolution message;
receive a channel state information reference signal (CSI-RS) configuration message, wherein the CSI-RS configuration message informs a starting resource block and a number of resource blocks of CSI-RS frequency resources through which CSI-RS is transmitted;
receive a full duplex (FD) configuration message, wherein the FD configuration message informs at least one of a FD time resource operating as full duplex, a downlink (DL) frequency resource used for DL, or an uplink (UL) frequency resource used for UL in the FD time resource;
receive the CSI-RS; and
measure the CSI-RS,
wherein, in the FD time resource, the CSI-RS is received and measured only from some CSI-RS frequency resources within the DL frequency resource among the CSI-RS frequency resources informed by the CSI-RS configuration message, and
wherein, in time resources other than the FD time resource, the CSI-RS is received and measured from the CSI-RS frequency resources informed by the CSI-RS configuration message.

28. At least one computer readable medium (CRM) having instructions to be executed by at least one processor to perform operations includes:

performing a cell search, wherein the cell search is a procedure in which the UE acquires time and frequency synchronization with a cell and detects a cell identity (ID) of the cell, based on a primary synchronization signal, a secondary synchronization signal and a physical broadcast channel (PBCH) demodulation reference signal (DMRS) of the cell;
obtaining system information of the cell from a base station;
performing a random access procedure with the base station, wherein the random access procedure includes i) transmitting a random access preamble to the base station, ii) receiving a random access response from the

34

base station, iii) performing scheduled transmission using a scheduled uplink grant in the random access response, and iv) receiving a contention resolution message;

receiving a channel state information reference signal (CSI-RS) configuration message, wherein the CSI-RS configuration message informs a starting resource block and a number of resource blocks of CSI-RS frequency resources through which CSI-RS is transmitted;

receiving a full duplex (FD) configuration message, wherein the FD configuration message informs at least one of a FD time resource operating as full duplex, a downlink (DL) frequency resource used for DL, or an uplink (UL) frequency resource used for UL in the FD time resource;

receiving the CSI-RS; and

measuring the CSI-RS,

wherein, in the FD time resource, the CSI-RS is received and measured only from some CSI-RS frequency resources within the DL frequency resource among the CSI-RS frequency resources informed by the CSI-RS configuration message, and

wherein, in time resources other than the FD time resource, the CSI-RS is received and measured from the CSI-RS frequency resources informed by the CSI-RS configuration message.

**29.** A method of operating a base station in a wireless communication system, the method comprising:

performing a random access procedure with a user equipment (UE), wherein the random access procedure includes i) receiving a random access preamble from the UE, ii) transmitting a random access response to the UE, iii) receiving a transmission scheduled by an uplink grant in the random access response from the UE and iv) transmitting a contention resolution message to the UE;

transmitting a channel state information reference signal (CSI-RS) configuration message to the UE, wherein the CSI-RS configuration message informs a starting resource block and a number of resource blocks of the CSI-RS frequency resources to which the CSI-RS is transmitted,

transmitting a full duplex (FD) configuration message to the UE, wherein the FD configuration message informs at least one of a FD time resource operating as full duplex, a downlink (DL) frequency resource used for DL, or an uplink (UL) frequency resource used for UL in the FD time resource;

transmitting the CSI-RS to the UE; and

receiving a measurement result of the CSI-RS from the UE,

wherein, in the FD time resource, the CSI-RS is transmitted only in some CSI-RS frequency resources within the DL frequency resource among the CSI-RS frequency resources informed by the CSI-RS configuration message, and

wherein, in time resources other than the FD time resource, the CSI-RS is transmitted in the CSI-RS frequency resources informed by the CSI-RS configuration message.

**30.** A base station (BS), the BS comprising:

a transceiver;

at least one memory; and

at least one processor operably coupled to the at least one memory and the transceiver, wherein the processor is adapted to:

perform a random access procedure with a user equipment (UE), wherein the random access procedure includes i) receiving a random access preamble from the UE, ii) transmitting a random access response to the UE, iii) receiving a transmission scheduled by an uplink grant in the random access response from the UE and iv) transmitting a contention resolution message to the UE;

transmit a channel state information reference signal (CSI-RS) configuration message to the UE, wherein the CSI-RS configuration message informs a starting resource block and a number of resource blocks of the CSI-RS frequency resources to which the CSI-RS is transmitted,

transmit a full duplex (FD) configuration message to the UE, wherein the FD configuration message informs at least one of a FD time resource operating as full duplex, a downlink (DL) frequency resource used for DL, or an uplink (UL) frequency resource used for UL in the FD time resource;

transmit the CSI-RS to the UE; and

receive a measurement result of the CSI-RS from the UE,

wherein, in the FD time resource, the CSI-RS is transmitted only in some CSI-RS frequency resources within the DL frequency resource among the CSI-RS frequency resources informed by the CSI-RS configuration message, and

wherein, in time resources other than the FD time resource, the CSI-RS is transmitted in the CSI-RS frequency resources informed by the CSI-RS configuration message.

# FIG. 1

EP 4 456 467 A1

# FIG. 2

UE

| PDCP | ↔ | PDCP |
| RLC | ↔ | RLC |
| MAC | ↔ | MAC |
| PHY | ↔ | PHY |

BS

# FIG. 3

UE

NAS

RRC

PDCP

RLC

MAC

PHY

BS

RRC

PDCP

RLC

MAC

PHY

MME

NAS

38

# FIG. 4

# FIG. 5

# FIG. 6

··· | One Frame (10ms) | ···

··· | Half-Frame (5ms) | Half-Frame (5ms) | ···

··· | Subframe 0 (1ms) | ··· | Subframe 4 (1ms) | Subframe 5 (1ms) | ··· | Subframe 9 (1ms) | ···

Subframe (1ms)

15KHz | Slot 0 (14symbols)

1ms

30KHz | Slot 0 (14symbols) | Slot 1

500us

60KHz | Slot 0 (14symbols) | Slot 1 | Slot 2 | Slot 3

250us

120KHz | Slot 0 (14symbols) | Slot 1 | Slot 2 | Slot 3 | Slot 4 | Slot 5 | Slot 6 | Slot 7

125us

# FIG. 7

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 456 467 A1

# FIG. 8

CCE #2    CCE #n

$N^{CORESET}_{RB}$ resource blocks

CCE #1

1, 2 or 3 OFDM symbols

# FIG. 9

Downlink only, or Uplink only

Frequency

RB index

Symbol index

One TTI

DL Control channel    UL Control channel

# FIG. 10

DL only

UL only

UL control

Mixed UL-DL

DL control

Slot

: DL      : UL

# FIG. 11

EP 4 456 467 A1

Initial cell search | system information reception | random access procedure | general DL/UL Tx/Rx

P/S-SCH & [DLRS] & PBCH

PDCCH/ PDSCH (BCCH)

PRACH

PDCCH/ PDSCH

PUSCH

PDCCH/ PDSCH

PDCCH/ PDSCH

PUSCH/ PUCCH

S11    S12    S13    S14    S15    S16    S17    S18

• DL/UL ACK/NACK
• UE CQI/PMI/Rank report using PUSCH and/or PUCCH

# FIG. 12

(a)

Carrier #0
Subband-wise Full Duplex

(b)

Carrier #0
Spectrum-Sharing Full Duplex

# FIG. 13

(a)

(b)

# FIG. 14

A: First time resource
B: Second time resource

(a)

(b)

# FIG. 15

152

DL

First frequency resource

UL

Second frequency resource

DL

First frequency resource

151

slot

: Symbol/PRB resource for CSI-RS

# FIG. 16

Performing the cell search based on a primary synchronisation signal, a secondary synchronisation signal and a physical broadcast channel (PBCH) demodulation reference signal (DMRS) — S161

↓

Obtaining system information of the cell from the base station — S162

↓

Performing a random access procedure with the base station — S163

↓

Receiving a CSI-RS configuration message (including information for the starting resource block and the number of resource blocks of the CSI-RS frequency resources on which the CSI-RS is transmitted) — S164

↓

Receiving a full duplex (FD) configuration message (including information for an FD time resource operating in full duplex and a DL frequency resource used for the downlink (DL) and/or a UL frequency resource used for the uplink (UL) in the FD time resource) — S165

↓

Receiving the CSI-RS — S166

↓

Measuring the CSI-RS. In the FD time resource, receiving and measuring the CSI-RS only from some of the CSI-RS frequency resources within the DL frequency resource, among the CSI-RS frequency resources indicated by the CSI-RS configuration message. In non-FD time resources, receiving and measuring from the CSI-RS frequency resources indicated by the CSI-RS configuration message — S167

# FIG. 17

(a)

(b)

▨ : Configured CSI-RS frequency resources

▤ : Resources on which the UE actually performs CSI-RS reception and measurement

# FIG. 18

EP 4 456 467 A1

# FIG. 19

EP 4 456 467 A1

100

First Device

102 — Processor(s)    Transceiver(s)

Memory(s)

104          106

108        208

200

Second Device

Transceiver(s)    Processor(s) — 202

Memory(s)

206          204

# FIG. 20

FIG. 21

# FIG. 22

# FIG. 23

Processor
(2000)

Control channel
transceiving unit
(2010)

Data channel
transceiving unit
(2020)

# FIG. 24

Processor
(3000)

Control information/
data generation module
(3010)

Transmission/
reception module
(3020)

# FIG. 25

108, 208

Processor(s)
(102, 202)

Memory(s)
(104, 204)

Transceiver(s)
(106, 206)

# FIG. 26

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

EP 4 456 467 A1

# FIG. 27

140a

Power supply unit

100

108

110

Communication unit

120

Control unit

130

Memory unit

140c

I/O unit

Display

Interface unit

140d

140b

# FIG. 28

<u>1</u>

EP 4 456 467 A1

## INTERNATIONAL SEARCH REPORT

| International application No. |
|---|
| **PCT/KR2022/020082** |

### A. CLASSIFICATION OF SUBJECT MATTER

**H04L 5/00**(2006.01)i; **H04L 5/14**(2006.01)i; **H04W 72/04**(2009.01)i

According to International Patent Classification (IPC) or to both national classification and IPC

### B. FIELDS SEARCHED

Minimum documentation searched (classification system followed by classification symbols)

H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 탐색(cell search), 랜덤 액세스 절차(random access procedure), CSI-RS(channel state information reference signal), 풀 듀플렉스(full duplex: FD), 시간 자원(time resource), 주파수 자원(frequency resource), 하프 듀플렉스(half duplex: HD)

### C. DOCUMENTS CONSIDERED TO BE RELEVANT

| Category* | Citation of document, with indication, where appropriate, of the relevant passages | Relevant to claim No. |
|---|---|---|
| A | US 2021-0152318 A1 (LG ELECTRONICS INC.) 20 May 2021 (2021-05-20)<br>See paragraphs [0060]-[0063]; and figure 1. | 1-30 |
| A | ERISSON. Duplex operation for RedCap. R1-2106565, 3GPP TSG RAN WG1 Meeting #106-e. 07 August 2021.<br>See sections 1-4.6. | 1-30 |
| A | LG ELECTRONICS. Aspects related to the duplex operation of RedCap. R1-2112057, 3GPP TSG RAN WG1 Meeting #107-e. 06 November 2021.<br>See sections 1-2.1. | 1-30 |
| A | VIVO et al. Discussion on RedCap half-duplex operation. R1-2106603, 3GPP TSG RAN WG1 #106-e. 07 August 2021.<br>See sections 1-2.2.5. | 1-30 |
| A | QUALCOMM INCORPORATED. Type-A HD-FDD for RedCap UE. R1-2103176, 3GPP TSG RAN WG1 Meeting #104b-e. 07 April 2021.<br>See sections 1-4.2.2. | 1-30 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 March 2023** | **20 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/020082**

| Patent document cited in search report | | | Publication date (day/month/year) | Patent family member(s) | | | Publication date (day/month/year) |
|---|---|---|---|---|---|---|---|
| US | 2021-0152318 | A1 | 20 May 2021 | CN | 112514445 | A | 16 March 2021 |
| | | | | EP | 3796702 | A1 | 24 March 2021 |
| | | | | EP | 3796702 | B1 | 02 November 2022 |
| | | | | US | 11509442 | B2 | 22 November 2022 |
| | | | | WO | 2020-032750 | A1 | 13 February 2020 |

Form PCT/ISA/210 (patent family annex) (July 2022)